# EUROPÄISCHE PATENTSCHRIFT

(11) **EP 4 284 737 B1**
(45) Veröffentlichungstag und Bekanntmachung des Hinweises auf die Patenterteilung: **18.12.2024**
(21) Anmeldenummer: 22718144.3
(22) Anmeldetag: 24.03.2022
(51) Int. Cl.: B65G 39/16, B65G 39/071, B65G 15/64, B65G 43/00

(54) **VORRICHTUNG MIT FÜHRUNGSEINHEIT ZUR FÜHRUNG EINES FÖRDERGURTES**
APPARATUS HAVING A GUIDE UNIT FOR GUIDING A CONVEYOR BELT
DISPOSITIF DOTÉ D'UNE UNITÉ DE GUIDAGE POUR GUIDER UNE BANDE TRANSPORTEUSE

(30) Priorität: 08.04.2021 DE 102021108695
(43) Veröffentlichungstag der Anmeldung: 06.12.2023
(73) Patentinhaber: ScrapeTec GmbH, 47475 Kamp-Lintfort (DE)
(72) Erfinder: DÜNNWALD, Wilfried, 47475 Kamp-Lintfort (DE); PRENNER, Michael, 8720 St. Margarethen bei Knittelfeld (AT); KOTH, Thorsten, 47506 Neukirchen-Vluyn (DE)
(74) Vertreter: Cohausz & Florack
(86) Internationale Anmeldenummer: PCT/EP2022/057781
(87) Internationale Veröffentlichungsnummer: WO 2022/214325

(56) Entgegenhaltungen:
- WO-A1-00/40492
- WO-A1-03/068638
- CN-A- 108 438 809
- JP-A- 2005 067 885
- JP-A- H03 151 111
- KR-A- 20180 034 790
- KR-A- 20220 037 249
- US-A- 4 214 689
- US-A- 4 520 723
- US-A- 5 833 171
- US-A- 5 911 304
- US-A1- 2009 134 373
- US-A1- 2017 137 229

## Beschreibung

Die Erfindung betrifft eine Vorrichtung zur Führung eines Fördergurtes, insbesondere eines Fördergurtes zum Transport von Schüttgut, mit einer Führungseinheit mit einem äußeren und einem inneren, hohlzylindrischen Körper, wobei der innere hohlzylindrische Körper eine erste Mittelachse hat und in dem äußeren hohlzylindrischen Körper, der eine zweite Mittelachse hat, angeordnet ist, mit mindestens einem Lager zur drehbaren Lagerung des äußeren hohlzylindrischen Körpers auf dem inneren hohlzylindrischen Körper und mit einem zur Lagerung des inneren hohlzylindrischen Körpers auf einer Zentralachse hergerichteten Gelenkkörper, wobei der Gelenkkörper weiter hergerichtet ist, eine horizontale und/oder vertikale Winkeländerung der ersten und/oder zweiten Mittelachse relativ zu einer Mittelachse der Zentralachse zu ermöglichen. Die Zentralachse kann dabei drehstarr oder auch drehbar in Halterungen gelagert sein. Der Gelenkkörper kann beispielsweise als Gummikörper oder Gummilager ausgeführt sein. Zudem betrifft die Erfindung ein System zur Überwachung und Führung eines Fördergurtes mit einer Vorrichtung der voranstehend genannten Art.

Der innere hohlzylindrische Körper und der äußere hohlzylindrische Körper können auch als Innenrohr und Außenrohr bezeichnet werden.

Fördergurte kommen in Gurtförderern zum Transport von Schüttgut wie z. B. Kohle, Erze, Sand, Zement oder dergleichen zum Einsatz, welche einen kontinuierlichen Transportstrom ermöglichen. Sie ermöglichen große Förderlängen, hohe Fördermengen und hohe Fördergeschwindigkeiten bei einer vergleichsweisen geringen Antriebsleistung.

Durch verschiedene Ursachen kann es beim Betrieb einer Gurtförderanlage zu einem Schieflauf und/oder außermittigen Lauf des Fördergurtes kommen. Dadurch wird der Verschleiß des Fördergurtes erhöht, wodurch höhere Wartungskosten und Ausfallzeiten auftreten können und die Effizienz und Wirtschaftlichkeit der Gurtförderanlage abnimmt. In besonders schweren Fällen kann es gar zu einem Ausfall der Gurtförderanlage infolge eines unerwarteten mechanischen Versagens des Fördergurtes kommen. Beispiele für den Gurtlauf beeinflussende Ursachen sind eine fehler- oder mangelhafte Gurtverbindung, verschmutzte Tragrollen, nicht rechtwinklig zur Bandlaufrichtung stehende Tragrollen, defekte Tragrollen, Defekte im Gurtzugträger, Achsversatz in Teilen oder einer kompletten Bandanlage sowie Umwelteinflüsse, insbesondere Wind, Eis und Schnee.

Zur Vermeidung beziehungsweise Reduzierung von Fehlern des Gurtlaufs werden in Fördergurtanlagen mitunter Vorrichtungen der eingangs genannten Art zur Führung des Fördergurtes eingesetzt (vgl. WO 03/068638 A1 die den Oberbegriff des Anspruchs 1 offenbart). Im montierten Zustand, in welchem die Zentralachse mittels zwei an einem Tragrahmen der Fördergurtanlage angebrachten Lagern gelagert ist, ist die Führungseinheit, insbesondere der äußere hohlzylindrische Körper, derart mit dem Fördergurt in Kontakt, dass durch einen Steuereingriff der Vorrichtung der Gurtlauf beeinflusst werden kann. Unter einem solchen Steuereingriff wird dabei eine Drehung und/oder eine Neigung der Führungseinheit verstanden, wobei die Drehung der Führungseinheit durch eine im Wesentlichen horizontale Winkeländerung der ersten und/oder zweiten Mittelachse relativ zu einer Mittelachse der Zentralachse und die Neigung der Führungseinheit durch eine im Wesentlichen vertikale Winkeländerung der ersten und/oder zweiten Mittelachse relativ zu einer Mittelachse der Zentralachse gekennzeichnet ist. Nachteilig an derartigen Vorrichtungen des Standes der Technik ist, dass Steuereingriffe, die auf Ursachen zurückzuführen sind, die eine zeitnahe Wartung oder eine Abschaltung der Anlage erfordern, nicht rechtzeitig erkannt werden.

Davon ausgehend liegt der Erfindung die Aufgabe zugrunde, eine Vorrichtung zur Führung eines Fördergurtes anzugeben, mit der die Lebensdauer eines Fördergurtes erhöht werden kann.

Diese Aufgabe wird durch eine Vorrichtung mit den in Anspruch 1 angegebenen Merkmalen gelöst. Bevorzugte und vorteilhafte Ausgestaltungen der erfindungsgemäßen Vorrichtung sind in den Unteransprüchen angegeben.

Zur Lösung der Aufgabe wird eine Vorrichtung der eingangs genannten Art vorgeschlagen, die erfindungsgemäß mit einem mindestens eine Sensoreinheit aufweisenden Mess- und Auswertesystem ausgestattet ist, wobei die Sensoreinheit innerhalb und/oder außerhalb der Führungseinheit angeordnet und das Mess- und Auswertesystem zur Erfassung der Winkeländerung hergerichtet ist.

Die Erfindung basiert auf der Überlegung, dass aus einem Steuerverhalten der Vorrichtung die Ursachen für einen Fehler des Gurtlaufs identifiziert beziehungsweise abgeleitet oder eingegrenzt werden können.

Unter dem Steuerverhalten der Vorrichtung wird dabei die Gesamtheit oder eine Vielzahl der über den Betrieb der Fördergurtanlage auftretenden Steuereingriffe verstanden, wobei das Steuerverhalten als Steuerkurve dargestellt werden kann. Dieses Steuerverhalten ändert sich mit dem Betriebszustand der Fördergurtanlage. Dabei kann man beispielsweise ein Grundsteuerverhalten von einem Steuerverhalten im Normalbetrieb unterscheiden, wobei ein Grundsteuerverhalten durch die Gesamtheit oder eine Vielzahl der Steuereingriffe bei einer Nullmessung (einer nicht beladenen neuen Gurtförderanlage oder einer ordentlich gewarteten Gurtförderanlage) gekennzeichnet ist, während ein Steuerverhalten im Normalbetrieb durch die Gesamtheit oder eine Vielzahl der Steuereingriffe bei einem beladenen Fördergurt gekennzeichnet ist. Davon abweichende Steuereingriffe, welche zumeist charakteristisch für die den Steuereingriff bedingende Ursache sind, kennzeichnen folglich einen vom Normalbetrieb abweichenden Betriebszustand. Da der Steuereingriff eine Winkeländerung bedingt, kann eine erfasste Winkeländerung genutzt werden, um die Ursache beziehungsweise die Ursachen für den Steuereingriff zu identifizieren oder zumindest auf eine begrenzte Anzahl möglicher Ursachen einzugrenzen.

Die Kenntnis der Ursache beziehungsweise der Ursachen für einen oder für mehrere Steuereingriffe ermöglicht eine Beurteilung eventuell nötiger Gegenmaßnahmen, um beispielsweise den Verschleiß des Fördergurtes zu reduzieren und somit die Einsatzzeit (Lebensdauer) des Fördergurtes zu erhöhen oder um unvorhergesehene Ausfälle der gesamten Fördergurtanlage infolge eines mechanischen Versagens des Fördergurtes oder eines anderen Teiles der Fördergurtanlage zu vermeiden.

Hierzu ist innerhalb und/oder außerhalb der Führungseinheit, bevorzugt auf der Zentralachse, beispielsweise auf der Mantelfläche der Zentralachse, oder gehalten am oder im Gelenkkörper, mindestens eine Sensoreinheit oder ein Mess- und Auswertesystem, welches mindestens eine Sensoreinheit aufweist, angeordnet, wobei die Sensoreinheit zur Messung einer Winkeländerung (direkte Erfassung) beziehungsweise einer mit der Winkeländerung in Zusammenhang stehenden Messgröße (indirekte Erfassung) hergerichtet ist. Eine mit der Winkeländerung in Zusammenhang stehende Messgröße kann auch als eine der Winkeländerung proportionale Messgröße bezeichnet werden. Die Sensoreinheit kann dabei in einem Gehäuse des Mess- und Auswertesystems oder entfernt von diesem innerhalb und/oder außerhalb der Führungseinheit angeordnet sein. Bevorzugt ist die Sensoreinheit geschützt innerhalb der Führungseinheit, vorzugsweise innerhalb des äußeren hohlzylindrischen Körpers der Führungseinheit angeordnet. Eine Auswerteeinheit des Mess- und Auswertesystems kann innerhalb oder außerhalb der Führungseinheit, beispielsweise auf der Zentralachse außerhalb der hohlzylindrischen Körper angeordnet sein. Vorzugsweise ist die Auswerteinheit des Mess- und Auswertesystems zusammen mit der mindestens einen Sensoreinheit ebenfalls innerhalb der Führungseinheit, beispielsweise auf der Zentralachse angeordnet. Alternativ können die mindestens eine Sensoreinheit und/oder die Auswerteinheit des Mess- und Auswertesystems aber auch außerhalb der Führungseinheit, und zwar sowohl außerhalb des inneren hohlzylindrischen Körpers als auch außerhalb des äußeren hohlzylindrischen Körpers der Führungseinheit angeordnet sein. Die Auswerteinheit bzw. das Mess- und Auswertesystem kann jeweils an einer Anlagensteuerung, beispielsweise einer Leitwarte, und/oder an einer nahe der Führungseinheit positionieren Alarmeinrichtung angeschlossen sein. Alternativ oder ergänzend liegt auch eine drahtlose Kommunikation der Auswerteinheit bzw. des Mess- und Auswertesystems mit Wartungspersonal im Rahmen der vorliegenden Erfindung. Das Wartungspersonal kann dann gegebenenfalls Maßnahmen zur Beseitigung einer Fehlfunktion einleiten.

Die Kommunikation der Auswerteinheit bzw. des Mess- und Auswertesystems mit einer Anlagensteuerung, beispielsweise einer Leitwarte, und/oder mit Wartungspersonal kann nach einer weiteren Ausgestaltung der Erfindung vorteilhaft mittels WLAN und/oder über eine Internet-Fernüberwachung erfolgen.

Misst die Sensoreinheit eine mit der Winkeländerung in Zusammenhang stehende Messgröße, kann das Mess- und Auswertesystem ausgehend von dieser Messgröße die Winkeländerung erfassen. Bevorzugt ist die Sensoreinheit derart angeordnet, dass die Erfassung einer Winkeländerung in vertikaler oder horizontaler Richtung ermöglicht wird.

Ein Beispiel für eine mit der Winkeländerung in Zusammenhang stehende Messgröße ist der Abstand zwischen einzelnen Komponenten der Vorrichtung, welche bei einem Steuereingriff relativ zueinander bewegt werden. Zum Beispiel ändert sich bei einem Steuereingriff der Vorrichtung, durch die spezielle Ausgestaltung des Gelenkkörpers, der Abstand zwischen der Mantelfläche der Zentralachse und einer (ersten) Zylindermantelinnenfläche des inneren hohlzylindrischen Körpers und/oder einer (zweiten) Zylindermantelinnenfläche des äußeren hohlzylindrischen Körpers in horizontaler und/oder in vertikaler Richtung. Aus den von der Sensoreinheit gemessenen Abständen vor und während des Steuereingriffs beziehungsweise während und nach dem Steuereingriff wird von dem Mess- und Auswertesystem die Winkeländerung erfasst und ermittelt, wobei für die Erfassung bzw. Ermittlung, die bei der indirekten Messung einer Berechnung der Winkeländerung aus der Differenz der Abstände entspricht, die Distanz zwischen einer festgelegten ersten axialen Position der Sensoreinheit bezogen auf die Mittelachse der Zentralachse und einer von dieser Position beabstandeten zweiten axialen Position, wiederum bezogen auf die Mittelachse der Zentralachse, bekannt sein muss. Diese zweite axiale Position kann beispielsweise durch den Gelenkmittelpunkt des Gelenkkörpers definiert sein, wobei die erste axiale Position der Sensoreinheit axial beabstandet von der zweiten Position auf der Mittelachse der Zentralachse liegt.

In einer vorteilhaften Ausgestaltung der Erfindung kann das Mess- und Auswertesystem mindestens eine zweite Sensoreinheit, bevorzugt eine zweite, eine dritte und eine vierte Sensoreinheit aufweisen, die innerhalb der Führungseinheit, insbesondere innerhalb des Gehäuses des Mess- und Auswertesystems, angeordnet und für eine direkte oder indirekte Erfassung der Winkeländerung hergerichtet ist bzw. sind. Der Einsatz von mindestens zwei Sensoreinheiten ermöglicht die Erfassung von Winkeländerungen in zwei verschiedenen Richtungen, beispielsweise in der horizontalen und in der vertikalen Richtung, so dass auch Ursachen für Steuereingriffe identifiziert werden können, die eine Winkeländerung in einer zur Laufrichtung des Fördergurtes, die beispielsweise mit der horizontalen Richtung zusammenfällt, verschiedenen Richtung bedingen, Auch die Erfassung von Winkeländerungen wird ermöglicht, die eine horizontale und eine vertikale Komponente aufweisen. Die mindestens eine zweite Sensoreinheit ist dabei derart angeordnet, dass zwischen einer Messrichtung der ersten Sensoreinheit und einer Messrichtung der zweiten Sensoreinheit ein Winkel vorliegt, der dem Winkel zwischen den Richtungen entspricht, in denen eine Winkeländerung erfasst werden soll, wobei die Sensorelemente in einer gemeinsamen Ebene angeordnet sein können, die sich senkrecht zur Mittelachse der Zentralachse erstreckt. Auch eine entlang der Mittelachse der Zentralachse beabstandete Anordnung der Sensorelemente ist denkbar.

Unter Messrichtung wird dabei die Richtung verstanden, in welcher die Sensoreinheit ein Messen der Winkeländerung beziehungsweise ein Messen einer mit der Winkeländerung zusammenhängenden Messgröße ermöglicht. Zum Beispiel ist die Messrichtung einer auf einem optischen Abstandsmessverfahren basierenden Sensoreinheit die Richtung, in der eine für die Messung des Abstands erforderliche Emission und Detektion von Licht ermöglicht wird.

Soll beispielsweise die Erfassung der Winkeländerung in vertikaler und in horizontaler Richtung erfolgen, so beträgt der Winkel zwischen den Messrichtungen der ersten und zweiten Sensoreinheit vorzugsweise ca. 90°. Der Winkel zwischen den Messrichtungen kann allerdings an die Messerfordernisse angepasst sein.

Des Weiteren ist die Anordnung weiterer Sensoreinheiten innerhalb der Führungseinheit von Vorteil, um durch die erhöhte Anzahl an Sensorelementen die Genauigkeit der erfassten Winkeländerung zu verbessern oder eine Erfassung in einer beliebigen Anzahl von Richtungen zu ermöglichen oder die Ausfallsicherheit des Mess- und Auswertesystems durch eine redundante Anordnung der Sensorelemente zu erhöhen. Hierdurch kann ein Ausfall oder eine starke Verschmutzung einzelner Sensorelemente bis zu einer planmäßigen Wartung der Anlage kompensiert werden. Für eine weitere Verbesserung der Genauigkeit beziehungsweise der Ausfallsicherheit können die Sensoreinheiten jeweils auf voneinander verschiedenen Messprinzipien beruhen.

Nach einer weiteren vorteilhaften Ausgestaltung der Erfindung beruht die mindestens eine Sensoreinheit auf einem berührungslosen Messprinzip zur Messung der Winkeländerung beziehungsweise einer mit der Winkeländerung in Zusammenhang stehenden Messgröße. Dabei kann die mindestens eine Sensoreinheit beispielsweise eine akustische, eine induktive, eine kapazitive, eine magnetische, eine optische oder eine piezoelektrische Sensoreinheit sein. Beispielsweise kann eine induktive Sensoreinheit auf der Mantelfläche der Zentralachse angeordnet werden, sofern der erste und/oder der zweite hohlzylindrische Körper zumindest abschnittsweise aus einem elektrisch leitenden Material bestehen. Eine vorteilhafte Ausgestaltung der Erfindung ist dadurch gekennzeichnet, dass die mindestens eine Sensoreinheit optische Lasersensoren aufweist. Solche Sensoren (Lasersensoren) sind vergleichsweise kostengünstig erhältlich.

Die Verwendung einer auf einem berührungslosen Messprinzip basierenden Sensoreinheit hat den Vorteil, dass die Rotation des Führungssystems relativ zur Zentralachse der Vorrichtung nicht zu einer Abnutzung des Sensors führt, so dass eine hohe Lebensdauer der Sensoreinheit erzielt wird und kein Ausfall infolge Abnutzung der Sensoreinheit zu erwarten ist.

Zusätzlich kann das Mess- und Auswertesystem mindestens eine Speicher- und Recheneinheit umfassen. Die Speicher- und Recheneinheit ist dabei zur Speicherung von erfassten Winkeländerungen und/oder zum Abgleich einer erfassten Winkeländerung mit gespeicherten Winkeländerungen hergerichtet. Bevorzugt umfasst die Speicher- und Recheneinheit sämtliche zur Speicherung und Verarbeitung von Daten benötigten Komponenten, beispielsweise einen Mikroprozessor und einen Datenspeicher, wobei der Datenspeicher fest oder lösbar mit der Speicher- und Recheneinheit verbunden ist. Weiter bevorzugt ist die Speicher- und Recheneinheit ein integraler Bestandteil des Mess- und Auswertesystems, welches dann die benötigten Komponenten umfasst und zum Beispiel als Einplatinen-Computer oder dergleichen ausgeführt ist.

Die Speicher- und Recheneinheit ermöglicht es, über den gesamten oder zumindest über einen Teilabschnitt eines Betriebszeitraums der erfindungsgemäßen Vorrichtung die Winkeländerungen zu speichern, welche während des Betriebs durch die Vorrichtung vorgenommene Steuereingriffe kennzeichnen. So können auf Basis der erhaltenen Daten das Betriebsverhalten des Fördergurtes ausgewertet und die die Steuereingriffe bedingenden Ursachen, welche beispielsweise zu einem erhöhten Verschleiß des Fördergurtes führen, erkannt beziehungsweise eingegrenzt werden.

Ein von der Speicher- und Recheneinheit vorgenommener Abgleich einer von dem Mess- und Auswertesystem erfassten Winkeländerung mit einer oder mehreren gespeicherten Winkeländerungen ermöglicht es, abweichende Winkeländerungen und somit abweichende Steuereingriffe zu identifizieren, die auf einen vom Normalbetrieb abweichenden Betriebszustand des Fördergurtes hinweisen. Vorliegend wird unter Abgleich ein Vergleich, insbesondere eine Differenzbildung, von zwei oder mehreren Winkeländerungen verstanden, wobei der Vergleich den Zeitpunkt, die Häufigkeit, die Richtung und die Amplitude der Winkeländerung umfasst. Die in der Speicher- und Recheneinheit gespeicherten Winkeländerungen können dabei Winkeländerungen entsprechen, die im bisherigen Betrieb des Fördergurtes durch das Mess- und Auswertesystem erfasst wurden und/oder Winkeländerungen entsprechen, die vor dem Betrieb des Fördergurtes, insbesondere während einer Nullmessung und/oder eines Normalbetriebs, erfasst wurden. Es liegt auch im Rahmen der Erfindung, dass die in der Speicher- und Recheneinheit gespeicherten Winkeländerungen auf für den Fördergurt vorhandenen Erfahrungswerten beruhen oder beispielsweise bei der Auslegung der den Fördergurt umfassenden Anlage computermodellbasiert berechnet wurden.

Festgestellte Abweichungen können datentechnisch gesondert gekennzeichnet und beispielsweise als Fehlerprotokoll in der Speicher- und Recheneinheit separat von den gespeicherten beziehungsweise von den zu speichernden Winkeländerungen gespeichert werden. Auch können die festgestellten Abweichungen mit einem die Abweichung eindeutig identifizierenden Datenfeld versehen werden, welches Attribute wie Häufigkeit, Datum, Uhrzeit, mögliche Ursache der Abweichung und/oder Gruppe von Ursachen der Abweichung oder ähnliche Angaben enthält. Eine Abweichung liegt vor, wenn der durch den Abgleich gewonnene Zahlenwert einen vorher definierten und in der Speicher- und Recheneinheit gespeicherten zulässigen Wert betragsmäßig überschreitet.

Zusätzlich kann durch das Mess- und Auswertesystem ein Hinweissignal bereitgestellt werden, wenn von der Rechen- und Speichereinheit eine Abweichung festgestellt wird, wobei das Hinweissignal für jede Abweichung identisch oder spezifisch sein kann. So wird es beispielsweise ermöglicht, dass das Hinweissignal einer Abweichung, welche durch den Steuereingriff infolge von verschmutzten Tragrollen, insbesondere verschmutzten Untertrum-Tragrollen verursacht wurden, von dem Hinweissignal verschieden ist, welches eine Abweichung anzeigt, die durch einen Steuereingriff infolge eines Fehlers einer Gurtverbindung bedingt ist. Das Hinweissignal kann somit als Indikator für die für den Steuereingriff kausale Ursache und/oder für eine Benachrichtigung von Wartungspersonal verwendet werden.

In einer weiteren Ausgestaltung kann eine Spannungsquelle, vorzugsweise eine wiederaufladbare Spannungsquelle, innerhalb der Führungseinheit und/oder beispielsweise innerhalb des Mess- und Auswertesystems angeordnet sein. Die Spannungsquelle ist zur Versorgung des mindestens einen Mess- und Auswertesystems hergerichtet und kann lösbar oder fest innerhalb oder außerhalb der Führungseinheit angeordnet sein. Durch die Verwendung einer in der Führungseinheit angeordneten Spannungsquelle kann das Mess- und Auswertesystem mit einer zum Betrieb benötigten Spannung versorgt werden, ohne dass eine aufwendige und gegebenenfalls störungsanfällige Verbindung des Mess- und Auswertesystems zu einer externen Spannungsquelle erforderlich ist. Unter einer externen Spannungsquelle wird eine Spannungsquelle verstanden, welche außerhalb der Führungseinheit angeordnet ist. Durch die Anordnung der Spannungsquelle innerhalb der Führungseinheit wird in vorteilhafterweise auch eine Abschirmung der Spannungsquelle gegen Umwelteinflüsse erzielt, insbesondere gegen Regen oder gegen vom Fördergurt transportiertes Schüttgut.

Alternativ oder ergänzend zu einer Energieversorgung mittels einer nahe oder innerhalb der Führungseinheit und/oder des Mess- und Auswertesystems angeordneten Spannungsquelle, vorzugsweise wiederaufladbaren Spannungsquelle, liegt es auch im Rahmen der Erfindung, das Mess- und Auswertsystem und/oder die mindestens eine Sensoreinheit über Versorgungskabel durch eine externe Stromquelle mit elektrischer Energie zu versorgen. Diesbezüglich kann auch von einer kabelgebundenen Energieversorgung des Mess- und Auswertsystems und/oder der mindestens einen Sensoreinheit gesprochen werden. Ebenso liegt es im Rahmen der Erfindung, das Mess- und Auswertsystem über Datenkabel bzw. Signalleitungen an eine externe Anlagensteuerung oder Überwachungseinrichtung, beispielsweise eine Leitwarte, anzuschließen.

Bevorzugt kann eine Versorgungselektronik innerhalb der Führungseinheit angeordnet und zur drahtgebundenen oder kontaktlosen Versorgung des Mess- und Auswertesystems und/oder für eine drahtgebundene oder kontaktlose Versorgung der Spannungsquelle hergerichtet sein. Bevorzugt wird die zur Versorgung des Mess- und Auswertesystems notwendige elektrische Energie mittels Nahfeldübertragungstechnik übertragen, wobei die elektrische Kopplung zwischen der Versorgungselektronik (Sender) und dem Mess- und Auswertesystem (Empfänger) bevorzugt als induktive, resonant induktive, magnetische resonante oder kapazitive Kopplung ausgeführt ist.

In einer weiteren Ausgestaltung der Vorrichtung verfügt das Mess- und Auswertesystem über eine Schnittstelleneinheit, die beispielsweise für eine kabellose signaltechnische Verbindung hergerichtet ist. Die Schnittstelleneinheit ermöglicht eine kabellose Kommunikation des Mess- und Auswertesystems mit einem externen Empfänger. Von dem Mess- und Auswertesystem erfasste oder in der Speichereinheit gespeicherte Daten können über die kabellose Kommunikation mit einem Empfänger an diesen weitergegeben werden. Zusätzlich kann die Schnittstelle genutzt werden, um Winkeländerungen in der Speicher- und Recheneinheit zu hinterlegen, die für einen Abgleich verwendet werden sollen. Die kabellose Kommunikation kann dabei über eine geeignete Funktechnik erfolgen, welche je nach Einsatzgebiet der die Vorrichtung umfassenden Anlage ausgewählt werden kann. Mittels der kabellosen signaltechnischen Verbindung können lange Kabelverbindungen zu der Vorrichtung entfallen, beispielsweise wenn diese sehr dezentral in einem Gurtförderer in einem weitläufigen Tagebau eingesetzt wird. Dabei kann sowohl eine kabellose signaltechnische Verbindung zu zentral platzierten Empfängern, beispielsweise einem Hostsystem oder einem Client-Server, als auch zu dezentralen und/oder mobilen Empfängern, beispielsweise einem Handgerät oder Smartphone hergestellt werden.

Eine weitere Ausgestaltung der Erfindung sieht vor, dass Signalverstärkungselemente, beispielsweise signalverstärkende Wandungsabschnitte, innerhalb der Führungseinheit angeordnet sind. Die Signalverstärkungselemente können dabei beispielsweise durch eine Beschichtung oder ein zusätzliches Element gebildet sein, welche auf den Wandungsabschnitt aufgebracht beziehungsweise welches an dem Wandungsabschnitt angebracht ist. Auch liegt es Rahmen der Erfindung, dass der den Wandungsabschnitt aufweisende Körper zumindest abschnittsweise als Signalverstärkungselement ausgeführt ist.

Unter einem Signalverstärkungselement ist ein Element zu verstehen, welches das zur Erfassung der Winkeländerung verwendete Messsignal eines Sensorelements verbessert. Beispielsweise ist ein Abschnitt der Innenfläche des inneren hohlzylindrischen Körpers elektrisch leitend ausgeführt oder abschnittsweise mit einer einen hohen Reflexionsgrad aufweisenden Beschichtung versehen, um das Messsignal eines induktiven beziehungsweise eines optischen Sensorelements zu verbessert. Der Abschnitt kann dabei eine längliche Erstreckung in axialer Richtung und/oder in Umfangsrichtung aufweisen. Das oder die Signalverstärkungselemente sind bevorzugt derart angeordnet, dass sie dem Sensorelement in Messrichtungen gegenüberliegen. Zusätzlich zur Signalverbesserung kann die Anordnung von mindestens einem Signalverstärkungselement auch dazu genutzt werden, die Auswahl an verfügbaren Messverfahren zu vergrößern. Ist beispielsweise der innere hohlzylindrische Körper aus einem elektrisch nicht leitenden Material hergestellt, so wird durch die Anordnung eines Signalverstärkungselements aus einem elektrisch leitenden Material der Einsatz einer induktiven Sensoreinheit ermöglicht.

Nach einer weiteren vorteilhaften Ausgestaltung der Erfindung sind Dichtelemente innerhalb der Führungseinheit, beispielsweise im Bereich eines ersten Endes und im Bereich eines zweiten Endes des äußeren hohlzylindrischen Körpers oder des inneren hohlzylindrischen Körpers, angeordnet. Die Dichtelemente können dabei als Federbälge, Gummimanschetten oder als Lamellen- oder Bürstendichtungen ausgestaltet sein, wobei die Auswahl der Dichtelemente unter Berücksichtigung der Drehzahl des äußeren und/oder des inneren hohlzylindrischen Körpers getroffen werden kann. Die Dichtelemente können auf der Zentralachse gelagert oder auf der ersten oder der zweiten Zylindermantelinnenfläche oder auf dem inneren hohlzylindrischen Körper angeordnet sein. Eine Kombination dieser Möglichkeiten ist denkbar, wenn die Dichtelemente mehrere Komponenten aufweisen. Beispielsweise können bei vergleichsweise hohen Drehzahlen Bürstendichtungen als Dichtelemente verwendet werden, die auf der ersten Zylindermantelinnenfläche derart angeordnet sind, dass eine Bürstendichtung bildende Borsten radial nach innen in Richtung der Zentralachse ausgerichtet sind. Bei einer Winkeländerung werden die aus elastischem Material bestehenden Borsten teilweise gestaucht oder aus ihrer ursprünglichen Lage ausgelenkt und die aus der Winkeländerung resultierende Verringerung des Abstands zwischen der ersten Zylindermantelinnenfläche und der Mantelfläche der Zentralachse kompensiert. Alternativ oder ergänzend zu den Bürstendichtungen können Federbälge oder Gummimanschetten mit dem inneren hohlzylindrischen Körper, vorzugsweise mit dessen Mantelaußenfläche, und der Zentralachse abdichtend verbunden sein. Die Federbälge oder Gummimanschetten sind dabei vorzugsweise so ausgebildet, dass sie zwischen dem äußeren hohlzylindrischen Körper und dem inneren hohlzylindrischen Körper angeordnete Wälzlager gegenüber einem Schmutzeintrag abdichten. Die Dichtelemente, vorzugsweise Federbälge, verhindern oder reduzieren den Eintrag von Fremdmaterial, beispielsweise von staubförmigem Fremdmaterial, in die Führungseinheit, so dass innerhalb der Führungseinheit angeordnete Komponenten, beispielsweise die mindestens eine Sensoreinheit oder das Mess- und Auswertesystem und der Gelenkkörper und/oder Wälzlager, kaum verschmutzt werden. Dies erhöht in vorteilhafter Weise die Lebensdauer der Komponenten und vermeidet oder reduziert störende Einflüsse auf die Erfassung der Winkeländerung, insbesondere wenn die verwendeten Sensorelemente auf einem berührungslosen Messprinzip beruhen.

Nach einer weiteren vorteilhaften Ausgestaltung der Erfindung ist die mindestens eine Sensoreinheit oder das Mess- und Auswertesystem auf der Zentralachse oder auf dem inneren hohlzylindrischen Körper gelagert, vorzugsweise auf die Zentralachse aufgeschoben oder auf den inneren hohlzylindrischen Körper aufgesteckt. Hierfür können die Komponenten der Sensoreinheit oder des Mess- und Auswertesystems in einem Gehäuse angeordnet werden, welches beispielsweise im Wesentlichen ringförmig ausgeführt ist und eine zentrale Ausnehmung aufweist, welche in ihren Abmessungen an den Durchmesser oder die Profilabmessungen der Zentralachse angepasst ist. Die radiale Erstreckung des Gehäuses ist deutlich kleiner als der Innendurchmesser des äußeren oder des inneren hohlzylindrischen Körpers, so dass das Gehäuse in die Führungseinheit eingebracht werden kann und im montierten Zustand eine Drehung bzw. Neigung der hohlzylindrischen Körper relativ zu der Zentralachse zulässt, so dass die Führungsfunktion (Lenkfunktion) der Führungseinheit unbeschränkt möglich ist. Bevorzugt ist das Gehäuse lösbar auf der Zentralachse gelagert. Somit kann das Mess- und Auswertesystem beispielsweise für Wartungszwecke oder zum Austausch der Spannungsquelle aus der Führungseinheit gezogen und im Anschluss wieder in die ursprüngliche Position innerhalb der Führungseinheit geschoben werden. Auch ermöglicht eine solche Ausgestaltung eine Nachrüstung bereits vorhandener Vorrichtungen, die bislang über kein Mess- und Auswertesystem verfügen. Weiter bevorzugt kann die Zentralachse für eine verbesserte Reproduzierbarkeit einer Lagerungsposition, welche sowohl eine axiale Lage des Systems entlang der Zentralachse als auch eine Winkellage relativ zu der vertikalen und/oder horizontalen Richtung umfasst, einen axialen Anschlag und/oder ein Führungselement, beispielsweise eine Nut oder Feder, aufweisen. Ferner kann für eine verbesserte Reproduzierbarkeit der Winkellage ein Lagesensor oder Stabilisator, beispielsweise ein Gyroskop, innerhalb des Mess- und Auswertesystems integriert sein.

Die erfindungsgemäße Vorrichtung ist nach einer weiteren vorteilhaften Ausgestaltung als selbstlernendes System ausgeführt. Die erfindungsgemäße Vorrichtung lässt somit nach einer ausreichenden Messdauer und Datenlage gegebenenfalls einen Rückschluss auf eine bestimmte Fehlfunktion einer Förderbandanlage zu. Somit lassen sich in vorteilhafter Weise Gründe für Funktionsstörungen der betreffenden Förderbandanlage identifizieren.

Eine vorteilhafte Ausgestaltung der Erfindung ist dadurch gekennzeichnet, dass das Mess- und Auswertsystem außerhalb des inneren hohlzylindrischen Körpers angeordnet ist. Die mindestens eine Sensoreinheit und die Auswerteeinheit des Mess- und Auswertesystems sind dabei vorzugsweise beabstandet voneinander angeordnet. In diesem Fall ist beispielsweise ein Sensorhalter auf ein Ende des inneren hohlzylindrischen Körpers aufgesteckt und mit diesem vorzugsweise kraftschlüssig oder reibschlüssig verbunden. Der Sensorhalter ist vorzugsweise buchsenförmig ausgebildet. An dem Sensorhalter kann ein Dichtelement, vorzugsweise in Form eines Feder- oder Gummibalges. angeschlossen sein. Das Dichtelement ist dabei mit der Zentralachse verbunden und dichtet den Innenraum des hohlzylindrischen Körpers gegen Staubeintritt ab. Die mindestens eine Sensoreinheit des Mess- und Auswertesystems ist dabei an dem Sensorhalter installiert. Beispielsweise ist der Sensorhalter mit vier Sensoreinheiten (Sensoren) versehen, die über den Umfang des buchsenförmigen Sensorhalters verteilt und beabstandet zueinander angeordnet sind. Die Sensoreinheiten messen vorzugsweise berührungslos in Richtung der Zentralachse. Eine Auswerteeinheit des Mess- und Auswertsystems kann beispielsweise außerhalb des äußeren hohlzylindrischen Körpers der Führungseinheit an einer die Zentralachse tragenden Halterung montiert sein. Des Weiteren kann an dem Sensorhalter auch mindestens ein Teil einer Versorgungselektronik angeordnet sein. Beispielsweise können einander zugeordnete Elemente eines Generatorsystems der Versorgungselektronik auf der Mantelfläche des Sensorhalters bzw. auf der Innenseite des äußeren hohlzylindrischen angeordnet sein.

Eine weitere Ausgestaltung der Erfindung ist dadurch gekennzeichnet, dass die mindestens eine Sensoreinheit am Ende des äußeren hohlzylindrischen Körpers, vorzugsweise im Wesentlichen oder weitgehend außerhalb des äußeren hohlzylindrischen Körpers angeordnet ist, wobei auf die Zentralachse ein Sensorhalter aufgesteckt und mit dieser vorzugsweise kraftschlüssig oder reibschlüssig verbunden ist. Der Sensorhalter ist beispielsweise buchsenförmig ausgebildet und weist vorzugsweise mehrere, z. B. vier Sensoreinheiten (Sensoren) auf, die über den Umfang des Sensorhalters verteilt und beabstandet zueinander angeordnet sind. Die Sensoreinheiten messen vorzugsweise berührungslos in Richtung eines Reflektorkörpers oder buchsenförmigen Körpers, der den Sensorhalter mit radialem Abstand umgibt und mit dem Ende des äußeren hohlzylindrischen Körpers vorzugsweise drehfest verbunden ist. Der Reflektorkörper oder buchsenförmige Körper hat hierzu einen Verbindungsabschnitt, der in den äußeren hohlzylindrischen Körper kraft- oder reibschlüssig eingesteckt wird bzw. ist. Die Sensoren (Sensoreinheiten) sind über Signalleitungen, beispielsweise in Form eines oder mehrerer Kabel, an einer Auswerteeinheit des Mess- und Auswertsystems angeschlossen. Die Auswerteeinheit kann beispielsweise außerhalb des äußeren hohlzylindrischen Körpers der Führungseinheit an einer die Zentralachse tragenden Halterung montiert sein.

Die oben aufgezeigte Aufgabe wird auch durch ein System zur Überwachung und Führung eines Fördergurtes mit einer erfindungsgemäßen Vorrichtung nach einer der oben angegebenen Ausgestaltungen und einer Aufhahmeeinheit gelöst, wobei die Aufnahmeeinheit für eine signaltechnische Verbindung mit dem Mess- und Auswertesystem hergerichtet ist.

Die Aufnahmeeinheit kann mit dem Mess- und Auswertesystem beispielsweise mittels einer Signalleitung oder funktechnikbasiert verbunden sein. Mittels der signaltechnischen Verbindung wird es ermöglicht, die von dem Mess- und Auswertesystem erfassten Winkeländerungen an die Aufnahmeeinheit zu übertragen, wobei die übertragenen Winkeländerungen auch Winkeländerungen entsprechen können, die während der Zeitdauer der Verbindung erfasst werden oder die in der Speicher- und Recheneinheit des Mess- und Auswertesystems gespeichert sind. Auch eine Kombination dieser Möglichkeiten liegt im Rahmen der Erfindung. Vorzugsweise können zusätzlich alle weiteren Daten und/oder Signale übertragen werden, die von dem Mess- und Auswertesystem gespeichert und/oder erzeugt wurden, insbesondere ein aus dem Abgleich resultierendes Fehlerprotokoll. Die Verbindung kann auch dazu verwendet werden, um die für den Abgleich benötigten Winkeländerungen auf die Speicher- und Recheneinheit zu übertragen. Bevorzugt hat die Aufnahmeeinheit eine Schnittstelle, insbesondere ein Bussystem, für die datentechnische Verbindung zu einem externen Datenspeicher, auf dem die Winkeländerungen, welche auf das Mess- und Auswertesystem übertragen werden sollen, gespeichert sind beziehungsweise auf dem die von dem Mess- und Auswertesystem erfassten und/oder gespeicherten Winkeländerungen gespeichert werden können. Der externe Datenspeicher kann bevorzugt an eine beliebige Recheneinheit angeschlossen und die gespeicherten Daten ausgewertet werden. So können die Daten beispielsweise für die Entwicklung von Algorithmen, welche das Steuerverhalten einer Anlage prognostizieren, genutzt werden.

Vorzugsweise umfasst die Aufnahmeeinheit eine optische Signaleinrichtung und/oder ist zur Verbindung mit einer optischen Signaleinrichtung hergerichtet. Die optische Signaleinrichtung kann dabei mindestens ein Leuchtmittel, vorzugsweise eine LED oder ein LED-Array, umfassen. Die optische Signaleinrichtung kann mittels des Leuchtmittels ein für eine Person wahrnehmbares Lichtsignal konstant oder periodisch emittieren, wenn die optische Signaleinrichtung ein Aktivierungssignal empfängt. Das Aktivierungssignal kann bevorzugt von dem Mess- und Auswertesystem oder von der Aufnahmeeinheit bereitgestellt werden, wobei das Aktivierungssignal dem Hinweissignal des Mess- und Auswertesystems entspricht oder ein eigenständig erzeugtes Signal ist. In Abhängigkeit des Aktivierungssignals emittiert das Leuchtmittel der optischen Signaleinrichtung ein oder mehrere Lichtsignale, um einen Betrachter über den Betriebszustand der Vorrichtung beziehungsweise der Anlage zu informieren. Beispielsweise wird Licht periodisch emittiert, sofern eine Abweichung oder eine Winkeländerung infolge eines Steuereingriffs erfasst wurde, welche einen vom Normalbetrieb abweichenden Betriebszustand kennzeichnet. Ein Betrachter kann so über einen Betriebszustand informiert werden, der einen Eingriff oder eine Wartung erfordert. Bevorzugt kann die optische Signaleinheit weitere Leuchtmittel umfassen, so dass ein normaler, ein davon abweichender Betriebszustand und ein kritischer Betriebszustand, beispielsweise ein für einen möglichen Ausfall der Anlage ursächlicher Betriebszustand, mittels verschiedener Leuchtmittel angezeigt werden kann, wobei das emittierte Licht aus voneinander verschiedenen Spektralbereichen des sichtbaren Lichts, zum Beispiel aus einem grünen, einem gelben und einem roten Spektralbereich, stammen kann, womit unterschiedliche Lichtfarben als Indikator für den Betriebszustand verwendet werden können. Bevorzugt umfasst die Signaleinrichtung mindestens ein grünes, ein gelbes und ein rotes Leuchtmittel, wobei darunter Leuchtmittel verstanden werden, die jeweils Licht in dem der Farbe zugeordnetem Spektralbereich emittieren.

In einer weiteren Ausgestaltung des erfindungsgemäßen Systems umfasst die Aufnahmeeinheit eine akustische Signaleinrichtung und/oder ist zur Verbindung mit einer akustischen Signaleinrichtung hergerichtet. Die akustische Signaleinrichtung umfasst bevorzugt einen Schallwandler sowie die benötigten Steuer- und Wandlerelemente zur Erzeugung eines akustischen Signals und kann im Gehäuse oder entfernt vom Gehäuse der Aufnahmeeinheit angeordnet sein. Die akustische Signaleinrichtung emittiert konstant oder periodisch, in Abhängigkeit des Aktivierungssignals, einen Ton und/oder Töne, wodurch beispielsweise Wartungspersonal auf einen vom Normalbetrieb abweichenden Betriebszustand hingewiesen wird.

Bevorzugt kann die Aufnahmeeinheit des Systems eine Auswerteeinheit und/oder eine Anzeigeneinheit aufweisen. Die Speicher- und Recheneinheit der Auswerteeinheit ist dabei vorzugsweise, analog zur Speicher- und Recheneinheit des Mess- und Auswertesystems, zur Speicherung von erfassten Winkeländerungen und/oder zum Abgleich einer erfassten Winkeländerung mit gespeicherten Winkeländerungen hergerichtet und umfasst bevorzugt ebenso die Komponenten, welche zur Speicherung und Verarbeitung von Daten benötigt werden. Die Anzeigeneinheit, beispielsweise eine LCD- oder OLED-Anzeige, ist dabei derart in einem Gehäuse der Aufnahmeeinheit angeordnet, dass sie von einem Benutzer abgelesen werden kann. Sie ist für die Anzeige des Betriebszustands des Fördergurtes hergerichtet, wobei hierzu eine Anzeige einer den Betriebszustand kennzeichnenden Farbcodierung, eines Klartextes, eines Zahlencodes oder dergleichen erfolgen kann.

Durch das Vorhandensein einer Speicher- und Recheneinheit in der Aufnahmeeinheit wird es möglich, die Speicher- und Recheneinheit redundant vorzuhalten, so dass bei einem Ausfall der Speicher- und Recheneinheit des Mess- und Auswertesystems oder der Aufnahmeeinheit die erfassten Winkeländerungen weiterhin gespeichert und abgeglichen werden können und/oder ein Aktivierungssignal erzeugt werden kann, welches den Ausfall des Mess- und Auswertesystems oder eine unterbrochene Verbindung zwischen dem Mess- und Auswertesystem und der Aufnahmeeinheit über die optische und/oder akustische Signaleinrichtung anzeigt. Es liegt allerdings auch im Rahmen der Erfindung, dass nur eine einzelne Speicher- und Recheneinheit in der Aufnahmeeinheit vorhanden ist.

In einer weiteren Ausgestaltung des erfindungsgemäßen Systems ist die Aufnahmeeinheit als Handgerät ausgeführt. Bei dieser Ausführung sind die für einen Abgleich der erfassten und/oder gespeicherten Winkeländerungen notwendigen Komponenten in dem Handgerät integriert. Das Handgerät ist bevorzugt über eine kabellose signaltechnische Verbindung mit dem Mess- und Auswertesystem verbindbar, so dass über diese Verbindung die erforderlichen Daten übertragen werden können. Zusätzlich umfasst das Handgerät vorzugsweise eine Anzeigeneinheit, z.B. ein Display, welche zur Anzeige des Betriebszustands des Fördergurtes und/oder der Fördergurtanlage hergerichtet ist. Durch die Auswertung und Anzeige der Daten auf dem Handgerät erhält ein eine Wartung durchführender Techniker Informationen über die Ursache oder Ursachen, welche zu einer Abweichung geführt haben. Entsprechend wird der Techniker in die Lage versetzt, die erforderlichen Arbeiten zielgerichtet und somit zeitsparend durchzuführen, so dass die Ausfallzeit der Anlage möglichst gering gehalten werden kann.

Die Datenübertragung kann in der erfindungsgemäßen Vorrichtung bzw. in dem erfindungsgemäßen System drahtlos oder drahtgebunden erfolgen.

Eine weitere vorteilhafte Ausgestaltung des erfindungsgemäßen Systems ist dadurch gekennzeichnet, dass der Fördergurt einen Marker aufweist oder mit einem Marker versehen ist, wobei das System einen Sensor zur Bestimmung einer Messperiode und/oder Umlaufzeit des Markers umfasst. Hierdurch können zusätzliche Messdaten betreffend die Messperiode bzw. Umlaufzeit erfasst werden, die beispielsweise mit Messdaten, welche das oben angegebene Mess- und Auswertesystem liefert, kombiniert werden oder kombiniert werden können.

Nach einer weiteren vorteilhaften Ausgestaltung des erfindungsgemäßen Systems umfasst dieses einen oder mehrere Sensoren zur Erfassung der Drehzahl einer der Gurttrommeln oder Tragrollen, vorzugsweise des äußeren hohlzylindrischen Körpers der Führungseinheit, und/oder zur Erfassung der Fördergurtposition auf einer der Gurttrommeln oder Tragrollen, beispielsweise auf dem äußeren hohlzylindrischen Körper der Führungseinheit.

Nachfolgend wird die Erfindung anhand einer Ausführungsbeispiele darstellenden Zeichnung näher erläutert. Es zeigen schematisch:
- Fig. 1: eine erfindungsmäße Vorrichtung zur Führung eines Fördergurtes, in einem Längsschnitt;
- Fig. 2: die Vorrichtung der Fig. 1 in dem gleichen Längsschnitt, wobei eine Führungseinheit der Vorrichtung für einen Steuereingriff auf den Fördergurt aus einer Normalstellung in eine Lenkstellung gedreht ist;
- Fig. 3: ein Mess- und Auswertesystem in einer perspektivischen Ansicht;
- Fig. 4: ein System zur Überwachung und Führung eines Fördergurtes mit einer Vorrichtung zur Führung eines Fördergurtes und einer Aufnahmeeinheit in einer Übersicht;
- Fig. 5: ein weiteres Ausführungsbeispiel einer erfindungsmäßen Vorrichtung zur Führung eines Fördergurtes, in einem Längsschnitt;
- Fig. 6: die Vorrichtung der Fig. 5 in dem gleichen Längsschnitt, wobei eine Führungseinheit der Vorrichtung für einen Steuereingriff auf den Fördergurt aus einer Normalstellung in eine Lenkstellung gedreht ist;
- Fig. 7 und 8: weitere Ausführungsbeispiele einer erfindungsmäßen Vorrichtung zur Führung eines Fördergurtes, jeweils in einem Längsschnitt, wobei eine Führungseinheit der Vorrichtung für einen Steuereingriff auf den Fördergurt aus einer Normalstellung in eine Lenkstellung gedreht ist;
- Fig. 9a: ein weiteres Ausführungsbeispiel einer erfindungsmäßen Vorrichtung zur Führung eines Fördergurtes, in einem Längsschnitt;
- Fig. 9b und 9c: eine Querschnittansicht der Vorrichtung aus Fig. 9a entlang der Schnittlinie IXb-IXb in Fig. 9c bzw. eine vergrößerte Ansicht des Details IXc in Fig. 9a;
- Fig. 10a: ein weiteres Ausführungsbeispiel einer erfindungsmäßen Vorrichtung zur Führung eines Fördergurtes, in einem Längsschnitt; und
- Fig. 10b: das linke Ende der Führungseinheit der Vorrichtung aus Fig. 10a, in einer perspektivischen Ansicht.

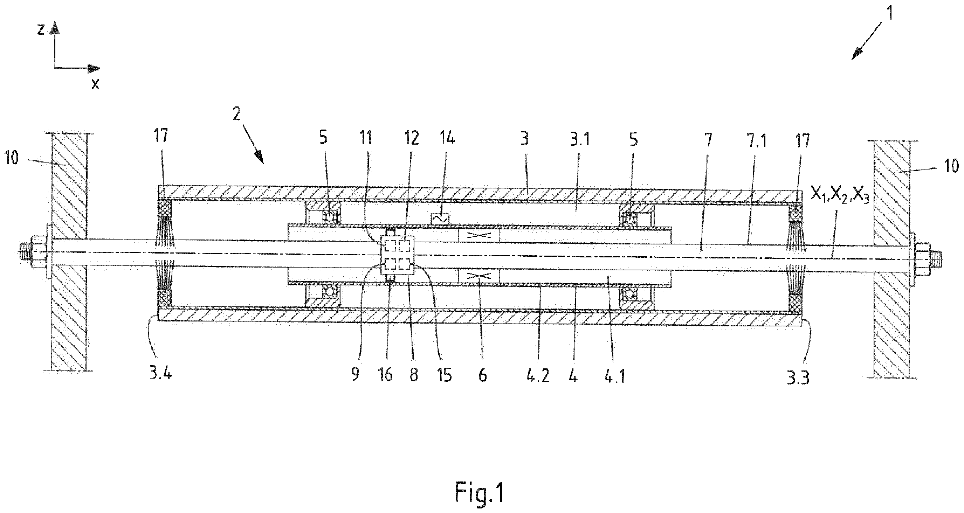

In Fig. 1 ist eine Vorrichtung 1 zur Führung eines (nicht gezeigten) Fördergurtes dargestellt. Die Vorrichtung 1 erzeugt Lenkbewegungen, um einem Schieflauf des Fördergurtes entgegen zu wirken.

Wie für sich genommen bekannt, liegt ein Fördergurt eines Gurtförderers im Obertrum und Untertrum auf Rollen (Tragrollen). Die Rollen sind beispielsweise in Rollenböcken eingesetzt, die im Traggerüst befestigt sind. Üblicherweise gibt es für das Obertrum und für das Untertrum des Fördergurtes verschiedene Rollenböcke, die an Tragholmen des Traggerüstes befestigt sind. Die Rollenböcke des Obertrums (Oberlaufes) tragen meist drei Rollen, die muldenförmig angeordnet sind. Die Rollen des Untertrums (Unterlaufes) sind oft als Einzelrollen ausgeführt.

Die Vorrichtung 1 zur Führung bzw. Lenkung eines Fördergurtes gemäß Fig. 1 wird vorzugsweise im Unterlauf des Gurtes angeordnet. Die Vorrichtung 1 hat eine Führungseinheit 2 mit einer Zentralachse 7. Die Zentralachse 7 wird beispielsweise mittels seitlichen Halterungen 10 am Traggerüst eines Gurtförderers gelagert. Die Zentralachse 7 ist vorzugsweise fest gelagert und überträgt keine Drehbewegungen.

Die Führungseinheit 2 hat einen äußeren hohlzylindrischen Körper 3 und einen inneren hohlzylindrischen Körper 4. Der innere hohlzylindrische Körper 4 ist in dem äußeren hohlzylindrischen Körper 3 angeordnet, wobei der äußere hohlzylindrische Körper 3 mittels Lager 5 drehbar auf dem inneren hohlzylindrischen Körper 4 gelagert ist. Die Lager (Drehlager) 5 sind im gezeigten Ausführungsbeispiel als Wälzlager ausgeführt. Der innere hohlzylindrische Körper 4 hat eine erste Mittelachse (X₁), während der äußere hohlzylindrische Körper 3 eine zweite Mittelachse (X₂) hat, die mit der ersten Mittelachse (X₁) zusammenfällt, d.h. übereinstimmt.

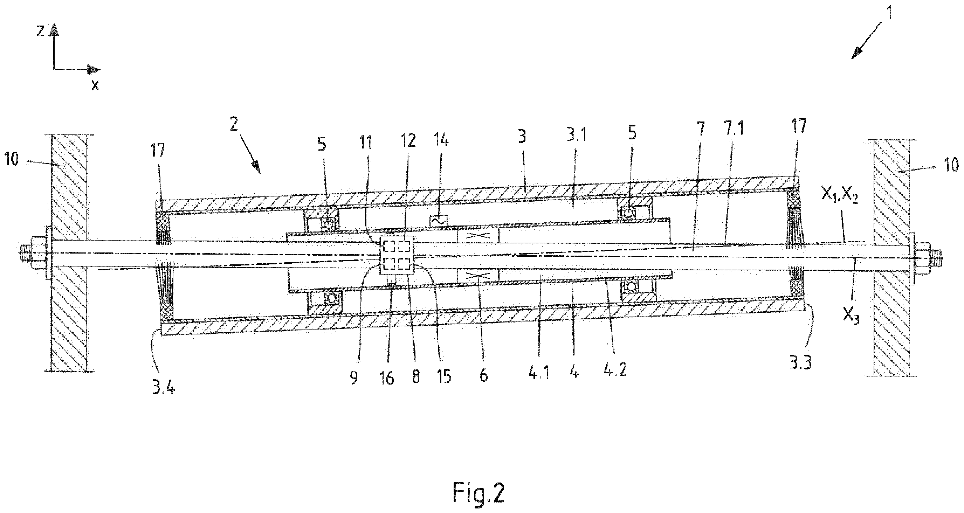

Zur Lagerung des inneren hohlzylindrischen Körpers 4 auf der Zentralachse 7, die eine Mittelachse X₃ definiert, ist ein Gelenkkörper 6 vorgesehen. Der Gelenkkörper 6 ist in der Zeichnung lediglich schematisch skizziert. Der Gelenkkörper 6 ist auf der Zentralachse 7 gelagert und vorzugsweise axial festgelegt. Der Gelenkkörper 6 ist beispielsweise als Gummikörper oder Gummilager ausgeführt. Der innere hohlzylindrische Körper 4 sitzt auf dem Gelenkkörper 6, wobei der Körper 4 mit seiner Innenfläche auf dem Gelenkkörper 6 abgestützt ist. Der hohlzylindrische Körper 4 ist vorzugsweise fest mit einem Umfangsabschnitt des Gelenkkörpers 6 verbunden, beispielsweise mittels einer Schraubverbindung. Die axiale Erstreckung des Gelenkkörpers 6 ist deutlich kleiner als die axiale Erstreckung des Körpers 4, wobei der Gelenkkörper 6 mittig innerhalb des Körpers 4 angeordnet ist. Dementsprechend überragen die Enden des hohlzylindrischen Körpers 4 den Gelenkkörper 6. Die gelenkige Lagerung des hohlzylindrischen Körpers 4 auf der Zentralachse 7 ermöglicht eine horizontale Verdrehung der hohlzylindrischen Körper 3, 4 mit deren Mittelachsen X₁, X₂ relativ zu der Zentralachse 7 und deren Mittelachse X₃. Unabhängig davon ermöglicht die gelenkige Lagerung des hohlzylindrischen Körpers 4 auf der Zentralachse 7 auch eine (vertikale) Neigung der hohlzylindrischen Körper 3, 4 mit deren Mittelachsen X₁, X₂ relativ zu der Zentralachse 7 und deren Mittelachse X₃. Anders ausgedrückt ermöglicht die gelenkige Lagerung des hohlzylindrischen Körpers 4 auf der Zentralachse 7 mittels des Gelenkkörpers 6 eine horizontale und/oder eine vertikale Winkeländerung zwischen den Mittelachsen X₁, X₂ der hohlzylindrischen Körper 3, 4 und der Mittelachse X₃ der Zentralachse 7 (siehe Fig. 1 und Fig. 2).

Zur Erfassung dieser Winkeländerung, die mit einem Steuereingriff der Vorrichtung einhergeht, ist innerhalb der Führungseinheit 2 mindestens eine Sensoreinheit 9 oder ein Mess- und Auswertesystem 8, welches mindestens eine Sensoreinheit 9 aufweist, angeordnet. Ist die Vorrichtung innerhalb einer Anlage montiert, so ist die Zentralachse 7 an zwei Positionen mittels seitlicher Halterungen 10 gelagert. In den Figuren 1 und 2 ist die horizontale Richtung mit x und die dazu senkrechte Richtung der axialen Erstreckung der Vorrichtung 1 mit z gekennzeichnet.

Abweichend von dem in den Figuren 1 und 2 dargestellten Ausführungsbeispiel kann das Auswertesystem 8 auch außerhalb der Führungseinheit 2, beispielsweise an einer der Halterungen 10 angeordnet bzw. befestigt sein, wobei die mindestens eine innerhalb der Führungseinheit 2 angeordnete Sensoreinheit 9 über ein Mess- oder Datenkabel an dem Auswertesystem 8 angeschlossen ist.

Die Sensoreinheit 9 des Mess- und Auswertesystems 8 ist als Beispiel für eine auf einem berührungslosen Messprinzip beruhende Sensoreinheit als induktiver oder magnetischer Abstandssensor, z. B. als Hall-Sensor, ausgeführt. Die gezeigte Anordnung ermöglicht eine indirekte Erfassung der Winkeländerung, indem der Abstand zwischen der Zylinderinnenfläche 4.1 des inneren hohlzylindrischen Körpers 4 und der Mantelfläche oder Außenseite 7.1 der Zentralachse 7 gemessen wird. Da der Abstand zwischen der axialen Position des Mess- und Auswertesystems 8 an der Mittelachse X₃ und einer von dieser Position beabstandeten zweiten axialen Position, wiederum an Mittelachse X₃ der Zentralachse, bekannt ist, kann aus den vor und während des Steuereingriffs bzw. während und nach dem Steuereingriff gemessenen Abständen, die Winkeländerung von dem Mess- und Auswertesystem 8 erfasst und ermittelt werden. Die besagte zweite axiale Position kann beispielsweise durch den Gelenkmittelpunkt des Gelenkkörpers definiert sein, wobei die erste axiale Position der Sensoreinheit 9 axial beabstandet von der zweiten Position auf der Mittelachse Z₃ der Zentralachse 7 liegt.

Für ein Speichern erfasster Winkeländerungen und/oder für einen Abgleich erfasster Winkeländerungen mit gespeicherten Winkeländerungen weist das Mess- und Auswertesystem 8 eine Speicher- und Recheneinheit 11 in Form eines Einplatinen-Computers auf, der vollständig innerhalb des Mess- und Auswertesystems 8 angeordnet ist. Alternativ kann die Speicher- und Recheneinheit 11 auch außerhalb der Führungseinheit 2 angeordnet und über ein Datenkabel an dem Mess- und Auswertesystem 8 angeschlossen sein.

Die Spannungsversorgung des Mess- und Auswertesystems 8 erfolgt beispielsweise über eine innerhalb desselben angeordnete Spannungsquelle 12 in Form einer wiederaufladbaren Batterie. Die Kapazität der Batterie ist dabei derart ausgelegt, dass das Mess- und Auswertesystem 8 für einen gewissen Zeitraum, beispielsweise für einen Zeitraum von mindestens mehreren Wochen oder Monaten, nur von der Spannungsquelle 12 versorgt werden kann. Für eine über diesen Zeitraum hinausgehende Versorgung kann innerhalb der Führungseinheit 2 ein Generator angeordnet sein. Eine innerhalb der Führungseinheit angeordnete Versorgungselektronik 14, die auch an einem optional vorhandenen Stromgenerator angeschlossen sein kann, ermöglicht eine kontaktlose Versorgung des Mess- und Auswertesystems 8 sowie der Spannungsquelle 12.

Alternativ oder ergänzend zu einer Energieversorgung mittels einer Batterie 12 und/oder eines Generators liegt es auch im Rahmen der Erfindung, das Mess- und Auswertsystem 8 und/oder die mindestens eine Sensoreinheit 9 über Versorgungskabel (nicht gezeigt) durch eine externe Stromquelle (nicht gezeigt) mit elektrischer Energie zu versorgen. Ebenso liegt es im Rahmen der Erfindung, das Mess- und Auswertsystem 8 über Datenkabel bzw. Signalleitungen an eine externe Anlagensteuerung oder Überwachungseinrichtung, beispielsweise eine Leitwarte, anzuschließen.

Weiter verfügt das Mess- und Auswertesystem 8 über eine Schnittstelleneinheit 15, die eine kabellose signaltechnische Verbindung zu einem externen Empfänger ermöglicht. Beispielsweise basiert die kabellose signaltechnische Verbindung auf einem lokalen Funknetz des IEEE 802.11-Standards. Über diese Verbindung können die von dem Mess- und Auswertesystem 8 erfassten und/oder gespeicherten Winkeländerungen an einen externen Empfänger gesendet und Winkeländerung von einer externen Datenquelle empfangen werden, die in der Speicher- und Recheneinheit 15 hinterlegt werden sollen.

Zur Verbesserung des Messsignals des Sensorelements 8 kann auf einem Abschnitt der Innenfläche 4.1 des hohlzylindrischen Körpers 4 ein Signalverstärkungselement 16 angeordnet sein. Das vorzugsweise im Wesentlichen aus Eisen hergestellte Signalverstärkungselement 11 ist dabei bandförmig ausgeführt, so dass während einer Rotation des äußeren hohlzylindrischen Körpers 3 stets zumindest ein Teilbereich des Signalverstärkungselements 11 in der Messrichtung des Sensorelements 8 liegt und der Abstand zwischen dem Sensorelement 8 und der Innenfläche 4.1 zuverlässig von dem induktiven Sensorelement 8 für die indirekte Erfassung der Winkeländerung gemessen werden kann.

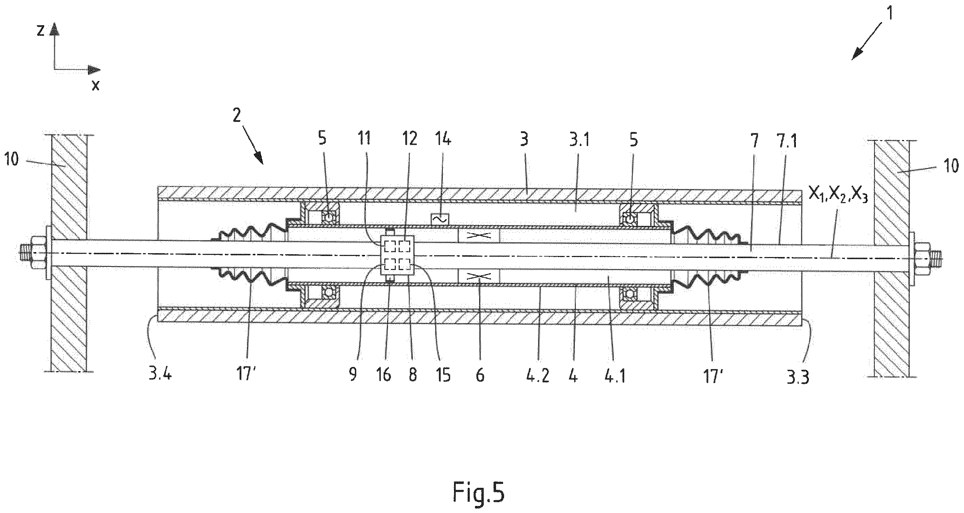

Im Bereich eines ersten Endes 3.3 sowie im Bereich eines zweiten Endes 3.4 des äußeren hohlzylindrischen Körpers 3 sind zur Verhinderung eines Eintrags von Verschmutzungen in die Führungseinheit Dichtelemente 17 in Form von Bürstendichtungen angeordnet und mit der Innenfläche 3.1 des Körpers 3 verbunden, wobei die die Bürste der Bürstendichtung bildenden Borsten, welche aus flexiblem Material bestehen, radial nach innen ausgerichtet sind und in einem nicht ausgelenkten Zustand der Führungseinheit 2 einen minimalen Luftspalt zwischen den Dichtelementen 17 und der Zentralachse 7 begrenzen. Bei einem Steuereingriff, wie er in Fig. 2 am Beispiel einer Verdrehung der hohlzylindrischen Körper 3, 4 relativ zu der Zentralachse 7 dargestellt ist, stellt die flexible Ausgestaltung der Dichtelemente 17 die Dichtungswirkung ohne nennenswerte Beeinträchtigung eines Steuereingriffs sicher, wobei die Borsten teilweise elastisch verformt werden (vgl. Fig. 2). Alternativ oder ergänzend zu diesen Bürstendichtungen können die Dichtelemente 17 als Federbälge (Gummibälge) ausgeführt werden (vgl. Fig. 5 bis 7).

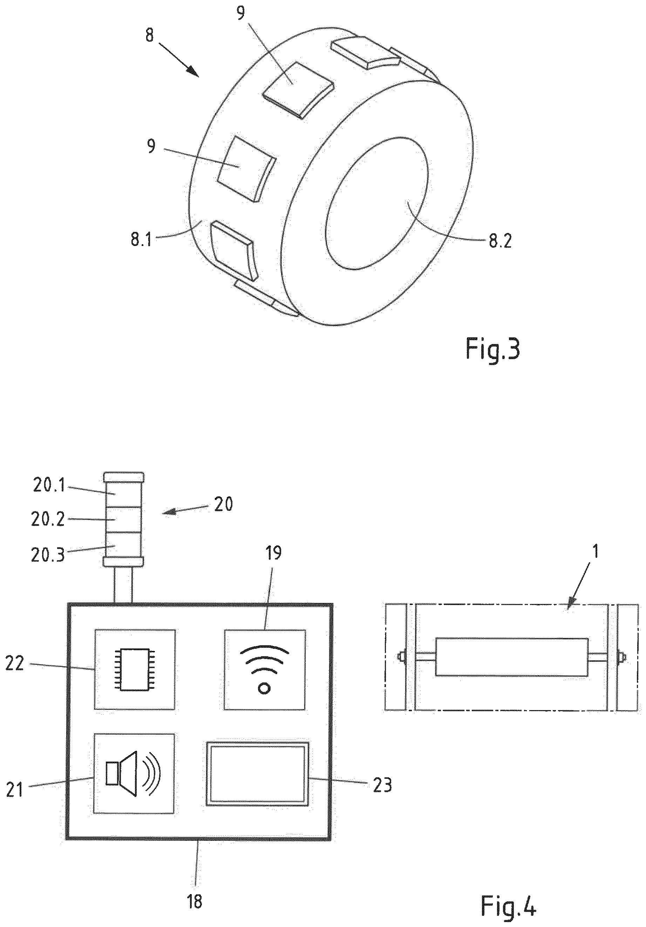

Sämtliche Komponenten des in Fig. 3 dargestellten Mess- und Auswertesystems 8 sind beispielsweise in einem im Wesentlichen ringförmigen Gehäuse 8.1 angeordnet, wobei das Gehäuse 8.1 eine zentrale Aufnahme 8.2 aufweist, die etwas größer als der Durchmesser der Zentralachse 7 ist, so dass das Mess- und Auswertesystem 8 auf die Zentralachse 7 aufgeschoben und auf dieser gelagert werden kann. Die radiale Abmessung des Gehäuses 8.1 ist dabei an den Innendurchmesser des hohlzylindrischen Körpers 4 angepasst, so dass das Mess- und Auswertesystem 8 innerhalb des Körpers 4 angeordnet werden kann. Das Mess- und Auswertesystem 8 kann zusätzlich zu der Sensoreinheit 9 eine zweite Sensoreinheit 9 aufweisen, die derart angeordnet ist, dass die Messrichtung der zweiten Sensoreinheit 9 gegenüber der Messrichtung der ersten Sensoreinheit 9 um ca. 90° abgewinkelt ist, so dass die erste Sensoreinheit 9 für die Erfassung einer horizontale Verdrehung der hohlzylindrischen Körper 3, 4 relativ zu der Zentralachse 7 verwendet werden kann, während die zweite Sensoreinheit 9 für die Erfassung einer Neigung der hohlzylindrischen Körper 3, 4 relativ zu der Zentralachse 7 verwendet werden kann. Dabei kann in das Mess- und Auswertesystem 8 ein die Ausrichtung des Gehäuses 8.1 unterstützter Stabilisator integriert sein, damit die Messrichtungen des ersten Sensorelements 9 und des zweiten Sensorelements 9 beim Aufschieben des Mess- und Auswertesystems 8 auf die Zentralachse 7 entsprechend orientiert sind.

In Fig. 4 ist ein System zur Überwachung und Führung eines Fördergurtes dargestellt, welches die oben beschriebene Vorrichtung 1 und eine Aufnahmeeinheit 18 umfasst. Die Aufnahmeeinheit 18 verfügt über ein Kommunikations- oder Verbindungsmodul 19 für eine funktechnikbasierte Verbindung mit dem Mess- und Auswertesystem 8. Diese signaltechnische Verbindung ermöglicht es, die von dem Mess- und Auswertesystem 8 in der Zeitdauer der Verbindung erfassten Winkeländerungen und/oder die in der Speicher- und Recheneinheit 11 des Mess- und Auswertesystems 8 gespeicherten Daten an die Aufnahmeeinheit 18 zu senden und/oder eine oder mehrere zum Abgleich innerhalb der Speicher- und Recheneinheit 11 benötigte Winkeländerungen auf die Speicher- und Recheneinheit 11 zu übertragen.

Die Aufnahmeeinheit 18 ist mit einer optischen Signaleinrichtung 20 ausgestattet, die ein rotes Leuchtmittel 20.1, ein gelbes Leuchtmittel 20.2 und ein grünes Leuchtmittel 20.3 aufweist. Ein Aktivierungssignal zur Aktivierung der Signaleinrichtung 20 wird in dem gezeigten Ausführungsbeispiel von der Speicher- und Recheneinheit 11 des Mess- und Auswertesystems 8 bereitgestellt (vgl. Figuren 1 und 2). Das Aktivierungssignal ist dabei derart moduliert, dass in einem normalen Betriebszustand des Gurtförderers, in welchem kein abweichendes Steuerverhalten der Führungseinheit 2 auftritt, das grüne Leuchtmittel 20.3 konstant Licht emittiert: Bei abweichendem Steuerverhalten bewirkt das Aktivierungssignal ein periodisches Emittieren von Licht mittels des gelben Leuchtmittels 20.2, wobei die Frequenz des Lichtsignals als Indikator für die Ursache des abweichenden Steuerverhaltens genutzt werden kann. Beispielsweise emittiert das gelbe Leuchtmittel 20.2 im Falle von das Steuerverhalten wenig beeinflussenden Einflüssen wie gering verschmutzte Tragrollen oder nicht optimale Gurtverbindungen, Licht mit einer vergleichsweisen niedrigen Frequenz. Die Emission von Licht mittels des roten Leuchtmittels 20.1 kennzeichnet ein Steuerverhalten, welches auf Ursachen hindeutet, die bei Nichtbehebung erfahrungsgemäß einen zeitnahen Ausfall des Fördergurtes zur Folge haben. Zusätzlich kann die Aufnahmeeinheit 18 eine akustische Signaleinrichtung 21, die einen Schallwandler sowie Steuer- und Wandlerelemente aufweisen. Die akustische Signaleinrichtung 21 emittiert in Abhängigkeit des Aktivierungssignals einen oder verschiedene Signaltöne.

Eine in der Aufnahmeeinheit 18 integrierte Auswerteeinheit 22 weist eine der Speicher- und Recheneinheit 11 des Mess- und Auswertesystems 8 entsprechende Speicher- und Recheneinheit auf, welche dieselbe Funktionalität bereitstellt. Im Falle eines Ausfalls der Speicher- und Recheneinheit 11 des Mess- und Auswertesystems 8 erzeugt die Speicher- und Recheneinheit der Auswerteeinheit 22 ein Aktivierungssignal für die optische und/oder akustische Signaleinrichtung 20, 21, so dass der Ausfall angezeigt werden kann. Des Weiteren umfasst die dargestellte Aufnahmeeinheit 18 eine Anzeigeneinheit 23 in Form einer LCD-Anzeige. Auf dieser Anzeigeneinheit 23 wird ein Zahlencode angezeigt, der den Betriebszustand bzw. das Steuerverhalten der Führungseinheit 2 kennzeichnet. Liegt ein vom Normalbetrieb abweichender Betriebszustand vor, so wird ein die Ursache kennzeichnender Zahlencode angezeigt.

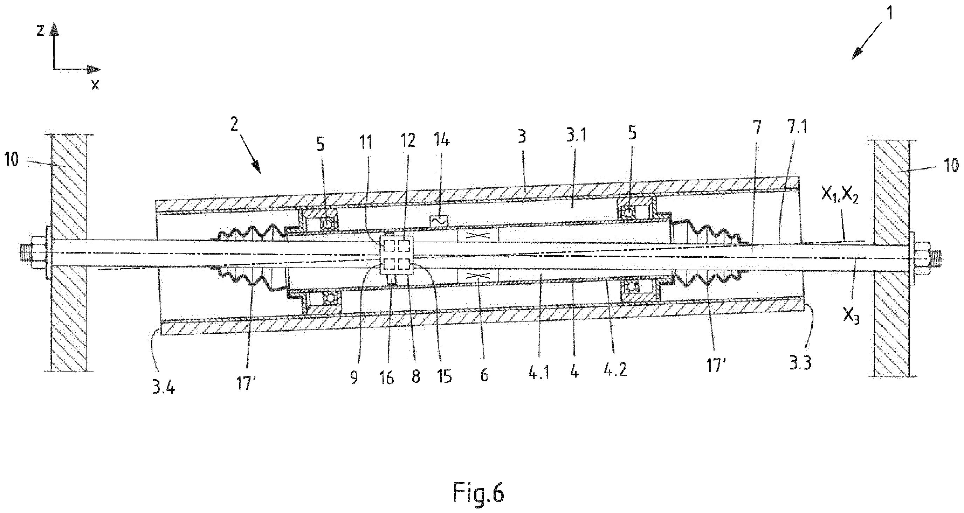

Das in den Figuren 5 und 6 dargestellte Ausführungsbeispiel der erfindungsmäßen Vorrichtung unterscheidet sich von dem in den Figuren 1 und 2 skizzierten Ausführungsbeispiel lediglich hinsichtlich der Ausführung der Dichtelemente 17. Anstelle von Dichtelementen 17 in Form von Bürstendichtungen weist die in den Figuren 5 und 6 gezeigte Vorrichtung Dichtelemente 17 in Form von Federbälgen (auch Gummibälge genannt) auf. Die Federbälge 17' sind jeweils mit dem inneren hohlzylindrischen Körper 4, vorzugsweise mit dessen Mantelaußenfläche 4.2, und der Zentralachse 7 abdichtend verbunden. Die Federbälge 17' sind dabei vorzugsweise so ausgeführt, dass sie zwischen dem äußeren hohlzylindrischen Körper 3 und dem inneren hohlzylindrischen Körper 4 angeordnete Drehlager 5, beispielsweise Wälzlager, gegenüber einem Schmutzeintrag abdichten. Die Federbälge 17' verhindern oder reduzieren somit den Eintrag von Fremdmaterial, beispielsweise von staubförmigem Fremdmaterial, in die Führungseinheit 2.

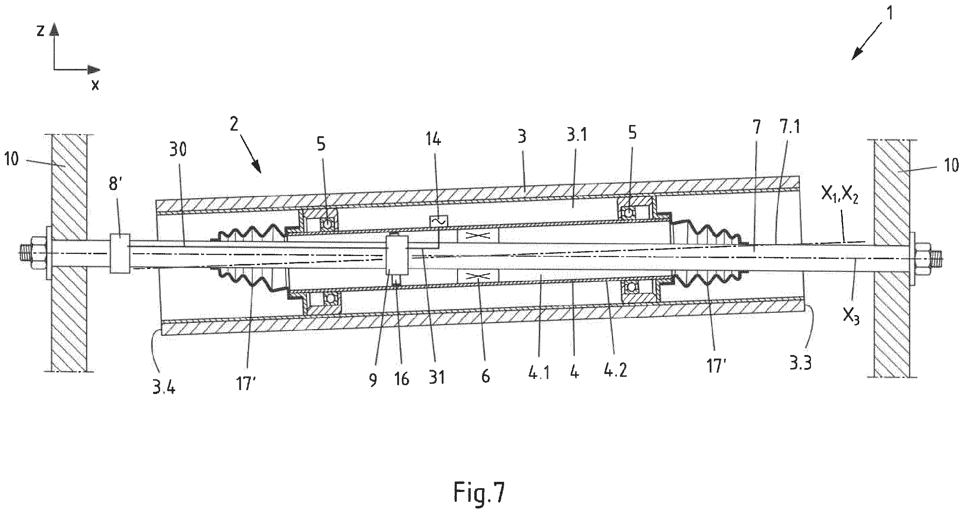

Das in Fig. 7 dargestellte Ausführungsbeispiel der erfindungsmäßen Vorrichtung unterscheidet sich von dem in den Figuren 5 und 6 skizzierten Ausführungsbeispiel lediglich hinsichtlich der Ausführung des Mess- und Auswertesystems 8. In dem in Fig. 7 skizzierten Beispiel sind mindestens eine Sensoreinheit 9 und eine Auswerteeinheit 8' des Mess- und Auswertesystems 8 beabstandet voneinander angeordnet. Während die mindestens eine Sensoreinheit 9 innerhalb der Führungseinheit 2, beispielsweise innerhalb des inneren hohlzylindrischen Körpers 4, sowie abgeschirmt durch den Federbalg 17', angeordnet ist, befindet sich die Auswerteeinheit 8' außerhalb des hohlzylindrischen Körpers 3. Beispielsweise ist die Auswerteeinheit 8' zwischen dem Ende 3.4 des hohlzylindrischen Körpers 3 und einer der Halterungen 10 auf der Zentralachse 7 montiert. Die Sensoreinheit 9 ist in diesem Fall beispielsweise über eine Signalleitung 30 an der Auswerteeinheit 8' angeschlossen. Optional können die Sensoreinheit 9 und/oder die Auswerteeinheit 8' über eine Versorgungsleitung 31 an einer oder der oben erwähnten Versorgungselektronik 14 angeschlossen sein.

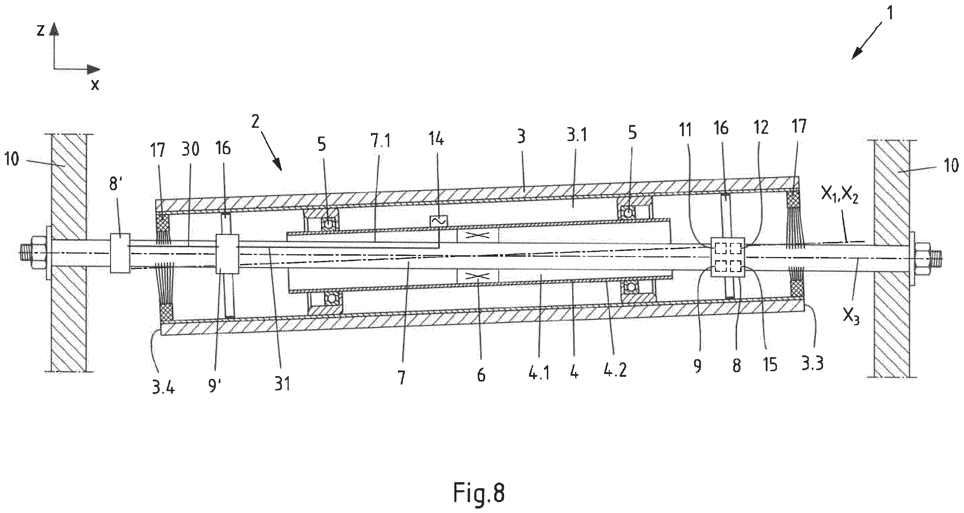

In Fig. 8 sind zwei weitere Ausführungsbeispiele oder Varianten der erfindungsmäßen Vorrichtung 1 dargestellt. In einer dieser Varianten, die im Bereich des linken Endes der Vorrichtung 1 gezeigt ist, sind wiederum mindestens eine Sensoreinheit 9' und eine Auswerteeinheit 8' des Mess- und Auswertesystems 8 beabstandet voneinander angeordnet. Während die mindestens eine Sensoreinheit 9' innerhalb der Führungseinheit 2, und zwar innerhalb des äußeren hohlzylindrischen Körper 3, jedoch außerhalb des inneren hohlzylindrischen Körpers 4 angeordnet ist, befindet sich die Auswerteeinheit 8' außerhalb des hohlzylindrischen Körpers 3_{.} Die Sensoreinheit 9' ist dabei durch Dichtelemente 17 in Form von Bürstendichtungen gegen Verschmutzungen geschützt. Die Auswerteeinheit 8' ist zwischen dem Ende 3.4 des hohlzylindrischen Körpers 3 und einer der Halterungen 10 auf der Zentralachse 7 montiert. Die Sensoreinheit 9' ist in diesem Fall beispielsweise über eine Signalleitung 30 an der Auswerteeinheit 8' angeschlossen. Optional können die Sensoreinheit 9' und/oder die Auswerteeinheit 8' über eine Versorgungsleitung 31 an einer oder der oben erwähnten Versorgungselektronik 14 angeschlossen sein. Alternativ zu der in Fig. 8 dargestellten Anordnung bzw. Montage auf der Zentralachse 7 kann die Auswerteeinheit 8' auch an einer der Halterungen 10 montiert sein.

Zugleich zeigt Fig. 8 im Bereich des rechten Endes der Vorrichtung 1 eine Variante, bei der die mindestens eine Sensoreinheit 9 und die Auswerteeinheit zusammen als kompaktes Mess- und Auswertesystem 8 ausgeführt sind. In diesem Ausführungsbeispiel ist das Mess- und Auswertesystem 8 jedoch im Unterschied zu dem in den Figuren 1 und 2 gezeigten Ausführungsbeispiel nicht innerhalb, sondern außerhalb des inneren hohlzylindrischen Körpers 4 und innerhalb des äußeren hohlzylindrischen Körpers 3 angeordnet, wobei das Mess- und Auswertesystem 8 wiederum durch Dichtelemente 17 in Form von Bürstendichtungen gegen Verschmutzungen geschützt ist. Hinsichtlich der Fig. 8 wird im Übrigen zur Vermeidung von Wiederholungen auf die obige Beschreibung der Figuren 1 und 2 verwiesen.

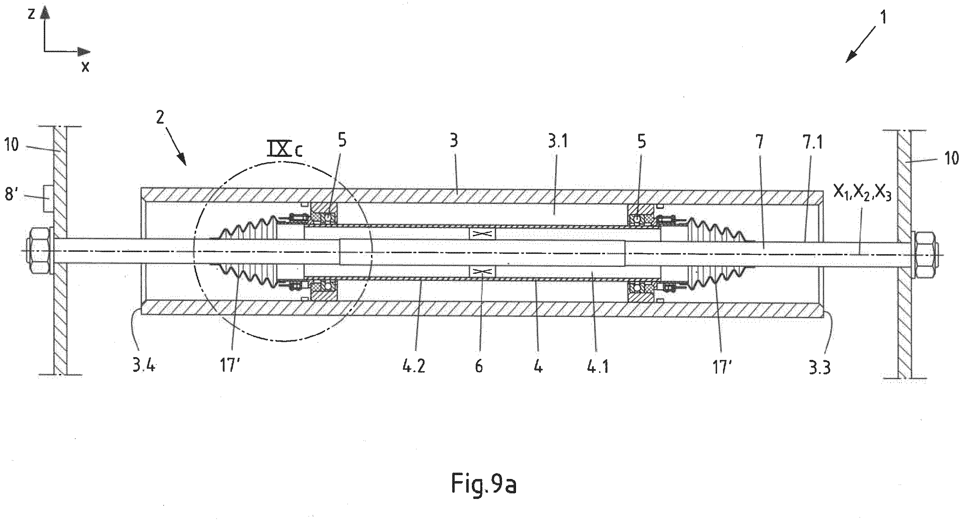

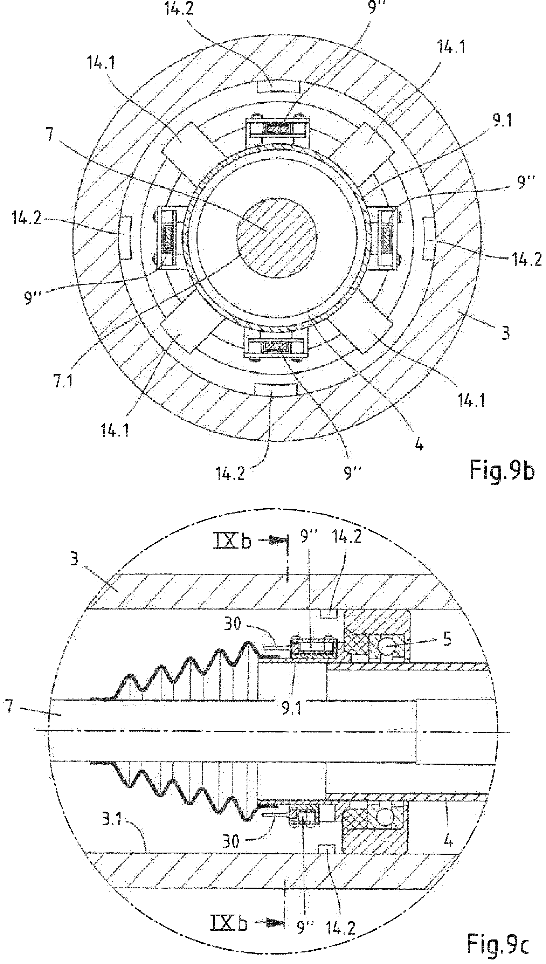

In den Figuren 9a bis 9c ist ein weiteres Ausführungsbeispiel der erfindungsmäßen Vorrichtung 1 dargestellt. Dieses Ausführungsbeispiel unterscheidet sich von den in den Figuren 1 bis 7 gezeigten Ausführungsbeispielen hinsichtlich der Ausgestaltung und Anordnung des Mess- und Auswertsystems. Das Mess- und Auswertsystem ist außerhalb des inneren hohlzylindrischen Körpers 4, der auch als Innenrohr bezeichnet werden kann, angeordnet. Die mindestens eine Sensoreinheit 9" und die Auswerteeinheit 8' des Mess- und Auswertesystems sind dabei beabstandet voneinander angeordnet. Auf ein Ende des inneren hohlzylindrischen Körpers (Innenrohr) 4 ist ein Sensorhalter 9.1 aufgesteckt und vorzugsweise kraftschlüssig oder reibschlüssig mit dem Körper 4 verbunden. Der Sensorhalter ist 9.1 buchsenförmig ausgebildet und vorzugsweise mit der Mantelaußenfläche 4.2 des inneren hohlzylindrischen Körpers 4 verbunden. Die Buchse bzw. der Sensorhalter 9.1 ist beispielsweise aus Kunststoff gefertigt. An der Buchse bzw. dem Sensorhalter 9.1 ist wiederum ein Dichtelement 17' vorzugsweise in Form eines Feder- oder Gummibalges angeschlossen. Das Dichtelement 17' ist mit der Zentralachse 7 verbunden und dichtet den Innenraum des hohlzylindrischen Körpers 4 gegen Schmutz- und Staubeintritt ab. Die mindestens eine Sensoreinheit 9" des Mess- und Auswertesystems ist an dem Sensorhalter 9.1 installiert. Beispielsweise ist der Sensorhalter 9.1 mit vier Sensoreinheiten (Sensoren) 9" versehen, die über den Umfang des buchsenförmigen Sensorhalters 9.1 verteilt und beabstandet zueinander angeordnet sind. Die Sensoreinheiten 9" messen berührungslos in Richtung der Zentralachse 7. Die Sensormessung auf die Außenseite 7.1 der Zentralachse 7 ist durch das Dichtelement 17' staubgeschützt. Zudem ist an dem Sensorhalter 9.1 auch mindestens ein Teil der Versorgungselektronik 14 angeordnet. In dem in Fig. 9 gezeigten Ausführungsbeispiel sind einander zugeordnete Elemente 14.1, 14.2 eines Generatorsystems der Versorgungselektronik 14 auf der Mantelfläche des Sensorhalters 9.1 bzw. auf der Innenfläche 3.1 des äußeren hohlzylindrischen Körpers 3 angeordnet (Fig. 9b). Die Elemente 14.1, 14.2 der Versorgungselektronik 14 sind axial versetzt zu den Sensoreinheiten 9" angeordnet (Fig. 9c). Die Auswerteeinheit 8' ist außerhalb des äußeren hohlzylindrischen Körpers 3 der Führungseinheit 2 an einer der Halterungen 10 montiert (Fig. 9a). Dementsprechend sind die Sensoreinheiten 9" sowie die Versorgungselektronik 14 über Signal- und Versorgungsleitungen 30, beispielsweise in Form eines oder mehrerer Kabel, an der Auswerteeinheit 8' angeschlossen. Bezüglich des in Fig. 9a gezeigten Ausführungsbeispiels wird im Übrigen zur Vermeidung von Wiederholungen auf die obige Beschreibung der Figuren 1 und 2 verwiesen.

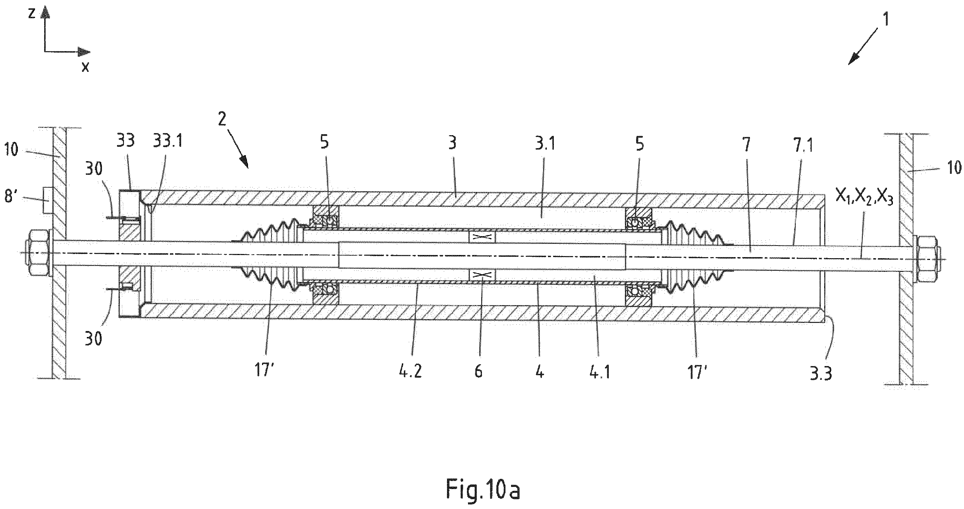

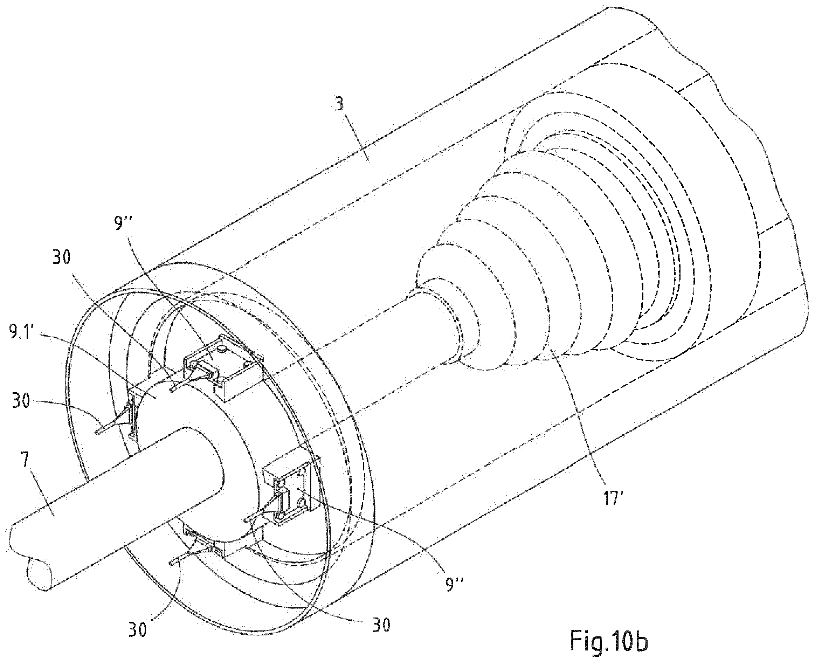

Die Figuren 10a und 10b zeigen ein weiteres Ausführungsbeispiel der erfindungsmäßen Vorrichtung 1. Im Unterschied zu dem in den Fig. 9a bis 9c gezeigten Ausführungsbeispiel ist die Messtechnik in diesem Fall nicht an dem inneren hohlzylindrischen Körper 4 und damit innerhalb des äußeren hohlzylindrischen Körpers (Außenrohr) 3 sondern am Ende des äußeren Körpers 3 und damit im Wesentlichen oder weitgehend außerhalb des äußeren Körpers 3 angeordnet. Auf die Zentralachse 7 ist ein Sensorhalter 9.1' aufgesteckt und vorzugsweise kraftschlüssig oder reibschlüssig mit der Zentralachse 7 verbunden. Der Sensorhalter 9.1' ist buchsenförmig ausgebildet. Beispielsweise ist der Sensorhalter 9.1' mit vier Sensoreinheiten (Sensoren) 9" versehen, die über den Umfang des buchsenförmigen Sensorhalters 9.1 verteilt und beabstandet zueinander angeordnet sind. Die Sensoreinheiten 9" messen berührungslos in Richtung eines ring- oder buchsenförmigen Körpers 33, der den Sensorhalter 9.1' radial beabstandet umgibt und mit dem Ende des äußeren hohlzylindrischen Körpers 3 vorzugsweise drehfest verbunden ist. Der ring- oder buchsenförmige Körper 33 weist hierzu einen Verbindungsabschnitt 33.1 auf, der in das Außenrohr 3 kraft- oder reibschlüssig eingesteckt ist. Der den Sensoreinheiten (Sensoren) 9" zugeordnete Körper 33 kann auch als Reflektorkörper bezeichnet werden. Die Sensoreinheiten 9" sind über Signalleitungen 30, beispielsweise in Form eines oder mehrerer Kabel, an der Auswerteeinheit 8' angeschlossen. Bezüglich des in Fig. 10a und 10b gezeigten Ausführungsbeispiels wird im Übrigen zur Vermeidung von Wiederholungen auf die obige Beschreibung der Figuren 1, 2 und 9a bis 9c verwiesen.

Die Ausführung der Erfindung ist nicht auf die in der Zeichnung dargestellten Ausführungsbeispiele beschränkt. Vielmehr sind zahlreiche Varianten denkbar, die auch bei einer von den gezeigten Beispielen abweichenden Gestaltung von der in den beigefügten Ansprüchen angegebenen Erfindung Gebrauch machen. Beispielsweise liegt es auch im Rahmen der Erfindung, dass die mindestens eine Sensoreinheit 9 bzw. das Mess- und Auswertesystem 8 auf der Zentralachse 7 außerhalb des inneren hohlzylindrischen Körpers 4 und innerhalb des äußeren hohlzylindrischen Körpers 3 angeordnet ist.

## Patentansprüche

1. Vorrichtung (1) zur Führung eines Fördergurtes, mit einer Führungseinheit (2) mit einem äußeren und einem inneren, hohlzylindrischen Körper (3, 4), wobei der innere hohlzylindrische Körper (4) eine erste Mittelachse hat und in dem äußeren hohlzylindrischen Körper (3), der eine zweite Mittelachse hat, angeordnet ist und beide hohlzylindrischen Körper (3, 4) jeweils eine Mittelachse (X₁, X₂) aufweisen, mit mindestens einem Lager (5) zur drehbaren Lagerung des äußeren hohlzylindrischen Körpers (3) auf dem inneren hohlzylindrischen Körper (4) und mit einem zur Lagerung des inneren hohlzylindrischen Körpers (4) auf einer Zentralachse (7) hergerichteten Gelenkkörper (6), wobei der Gelenkkörper (6) weiter hergerichtet ist, eine horizontale und/oder vertikale Winkeländerung der ersten und/oder zweiten Mittelachse (X₁, X₂) relativ zu einer Mittelachse (X₃) der Zentralachse (7) zu ermöglichen, **gekennzeichnet durch** ein Mess- und Auswertesystem (8) mit mindestens einer Sensoreinheit (9, 9', 9"), die innerhalb und/oder außerhalb der Führungseinheit (2) angeordnet ist, wobei das Mess- und Auswertesystem (8) zur Erfassung der Winkeländerung hergerichtet ist.

2. Vorrichtung nach Anspruch 1,
**dadurch gekennzeichnet, dass** das Mess- und Auswertesystem (8) mindestens eine zweite Sensoreinheit (9, 9', 9") aufweist, wobei die zweite Sensoreinheit (9, 9', 9") innerhalb der Führungseinheit (2) angeordnet ist.

3. Vorrichtung nach Anspruch 1 oder 2,
**dadurch gekennzeichnet, dass** die jeweilige Sensoreinheit (9, 9', 9") eine auf einem berührungslosen Messprinzip beruhende Sensoreinheit (9, 9', 9") ist.

4. Vorrichtung nach einem der Ansprüche 1 bis 3,
**dadurch gekennzeichnet, dass** das Mess- und Auswertesystem (8) mindestens eine Speicher- und Recheneinheit (11) umfasst, wobei die Speicher- und Recheneinheit (11) zur Speicherung von erfassten Winkeländerungen und/oder zum Abgleich einer erfassten Winkeländerung mit gespeicherten Winkeländerungen hergerichtet ist.

5. Vorrichtung nach einem der Ansprüche 1 bis 4,
**dadurch gekennzeichnet, dass** eine Spannungsquelle (12), vorzugsweise eine wiederaufladbare Spannungsquelle (12), innerhalb der Führungseinheit (2) angeordnet ist, wobei die Spannungsquelle (12) zur Versorgung des mindestens einen Mess- und Auswertesystems (8) hergerichtet ist.

6. Vorrichtung nach einem der Ansprüche 1 bis 5,
**dadurch gekennzeichnet, dass** eine Versorgungselektronik (14) innerhalb der Führungseinheit (2) angeordnet ist, wobei die Versorgungselektronik (14) zur kontaktlosen Versorgung des Mess- und Auswertesystems (8) und/oder der Spannungsquelle (12) hergerichtet ist.

7. Vorrichtung nach einem der Ansprüche 1 bis 6,
**dadurch gekennzeichnet, dass** das Mess- und Auswertesystem (8) über eine Schnittstelleneinheit (15)verfügt, die für eine kabellose signaltechnische Verbindung hergerichtet ist.

8. Vorrichtung nach einem der Ansprüche 1 bis 7,
**dadurch gekennzeichnet, dass** Dichtelemente (17, 17') innerhalb der Führungseinheit (2), vorzugsweise im Bereich eines ersten Endes (3.3) und im Bereich eines zweiten Endes (3.4) des äußeren hohlzylindrischen Körpers (3), angeordnet sind.

9. Vorrichtung nach einem der Ansprüche 1 bis 8,
**dadurch gekennzeichnet, dass** das Mess- und Auswertesystem (8) auf der Zentralachse (7) oder auf dem inneren hohlzylindrischen Körper (4) gelagert, vorzugsweise auf die Zentralachse (7) aufgeschoben oder auf den inneren hohlzylindrischen Körper (4) aufgesteckt ist.

10. System zur Überwachung und Führung eines Fördergurtes mit einer Vorrichtung nach einem der Ansprüche 1 bis 9 und einer Aufnahmeeinheit (18), wobei die Aufnahmeeinheit (18) für eine signaltechnische Verbindung mit dem Mess- und Auswertesystem (8) hergerichtet ist.

11. System nach Anspruch 10,
**dadurch gekennzeichnet, dass** die Aufnahmeeinheit (18) eine optische Signaleinrichtung (20) umfasst und/oder zur Verbindung mit einer optischen Signaleinrichtung (20) hergerichtet ist.

12. System nach Anspruch 10 oder 11,
**dadurch gekennzeichnet, dass** die Aufnahmeeinheit (18) eine akustische Signaleinrichtung (21) umfasst und/oder zur Verbindung mit einer akustischen Signaleinrichtung (21) hergerichtet ist.

13. System nach einem der Ansprüche 10 bis 12,
**dadurch gekennzeichnet, dass** die Aufnahmeeinheit (18) eine Auswerteeinheit (22) und/oder eine Anzeigeneinheit (23) umfasst, wobei die Auswerteeinheit (22) mindestens eine Speicher- und Recheneinheit aufweist und wobei die Speicher- und Recheneinheit zur Speicherung von erfassten Winkeländerungen und/oder zum Abgleich einer erfassten Winkeländerung mit gespeicherten Winkeländerungen hergerichtet ist.

14. System nach einem der Ansprüche 10 bis 13,
**dadurch gekennzeichnet, dass** die Aufnahmeeinheit (18) als Handgerät ausgeführt ist.

15. System nach einem der Ansprüche 10 bis 14,
**dadurch gekennzeichnet, dass** der Fördergurt einen Marker aufweist oder mit einem Marker versehen ist, wobei das System einen Sensor zur Bestimmung einer Messperiode und/oder Umlaufzeit des Markers umfasst.

## Claims

1. Device (1) for guiding a conveyor belt, having a guide unit (2) with an outer and an inner hollow-cylindrical body (3, 4), the inner hollow-cylindrical body (4) having a first central axis and being arranged in the outer hollow-cylindrical body (3), which has a second central axis, and both hollow-cylindrical bodies (3, 4) each have a central axis (X₁, X₂), with at least one bearing (5) for rotatably mounting the outer hollow-cylindrical body (3) on the inner hollow-cylindrical body (4) and with an articulation body (6) designed for mounting the inner hollow-cylindrical body (4) on a central axle (7), wherein the articulation body (6) is further designed to allow a horizontal and/or vertical change in angle of the first and/or second central axis (X₁, X₂) relative to a central axis (Xa) of the central axle (7), **characterized by** a measuring and evaluating system (8) comprising at least one sensor unit (9, 9', 9") arranged inside and/or outside the guide unit (2), wherein the measuring and evaluating system (8) is designed to detect the change in angle.

2. Device according to claim 1,
**characterized in that** the measuring and evaluation system (8) has at least a second sensor unit (9, 9', 9"), the second sensor unit (9, 9', 9") being arranged inside the guide unit (2).

3. Device according to claim 1 or 2,
**characterized in that** the respective sensor unit (9, 9', 9") is a sensor unit (9, 9', 9") based on a contactless measuring principle.

4. Device according to any one of claims 1 to 3,
**characterized in that** the measuring and evaluation system (8) comprises at least one memory and computing unit (11), wherein the memory and computing unit (11) is designed to store detected changes in angle and/or to compare a detected change in angle with stored changes in angle.

5. Device according to any one of claims 1 to 4,
**characterized in that** a voltage source (12), preferably a rechargeable voltage source (12), is arranged within the guide unit (2), the voltage source (12) being designed to supply the at least one measuring and evaluation system (8).

6. Device according to any one of claims 1 to 5,
**characterized in that** an electronic supply (14) is arranged within the guide unit (2), the electronic supply (14) being designed for contactless supply of the measuring and evaluation system (8) and/or the voltage source (12).

7. Device according to any one of claims 1 to 6,
**characterized in that** the measuring and evaluation system (8) has an interface unit (15) which is designed for a wireless signal connection.

8. Device according to any one of claims 1 to 7,
**characterized in that** sealing elements (17, 17') are arranged inside the guide unit (2), preferably in the region of a first end (3.3) and in the region of a second end (3.4) of the outer hollow-cylindrical body (3).

9. Device according to any one of claims 1 to 8,
**characterized in that** the measuring and evaluation system (8) is mounted on the central axle (7) or on the inner hollow-cylindrical body (4), preferably pushed onto the central axle (7) or plugged onto the inner hollow-cylindrical body (4).

10. System for monitoring and guiding a conveyor belt with a device according to any one of claims 1 to 9 and a recording unit (18), wherein the recording unit (18) is designed for a signal connection with the measuring and evaluation system (8).

11. System according to claim 10,
**characterized in that** the recording unit (18) comprises an optical signaling device (20) and/or is designed for connection to an optical signaling device (20).

12. System according to claim 10 or 11,
**characterized in that** the recording unit (18) comprises an acoustic signaling device (21) and/or is designed for connection to an acoustic signaling device (21).

13. System according to any one of claims 10 to 12,
**characterized in that** the recording unit (18) comprises an evaluation unit (22) and/or a display unit (23), wherein the evaluation unit (22) has at least one memory and computing unit and wherein the memory and computing unit is designed for storing detected changes in angle and/or for comparing a detected change in angle with stored changes in angle.

14. System according to any one of claims 10 to 13,
**characterized in that** the recording unit (18) is designed as a hand-held device.

15. System according to any one of claims 10 to 14,
**characterized in that** the conveyor belt has a marker or is provided with a marker, the system comprising a sensor for determining a measuring period and/or circulation time of the marker.

## Revendications

1. Dispositif (1) pour guider une bande transporteuse, avec une unité de guidage (2) avec un corps cylindrique creux externe et un corps cylindrique creux interne (3, 4), dans lequel le corps cylindrique creux interne (4) a un premier axe central et est disposé dans le corps cylindrique creux externe (3), qui a un deuxième axe central, et les deux corps cylindriques creux (3, 4) présentent à chaque fois un axe médian (X₁, X₂), avec au moins un palier (5) pour le logement rotatif du corps cylindrique creux externe (3) sur le corps cylindrique creux interne (4) et avec un corps articulé (6) conçu pour le logement du corps cylindrique creux interne (4) sur un axe central (7), dans lequel le corps articulé (6) est conçu, en outre, pour permettre une modification angulaire horizontale et/ou verticale du premier et/ou deuxième axe médian (X₁, X₂) par rapport à un axe médian (X₃) de l'axe central (7), **caractérisé par** un système de mesure et d'évaluation (8) avec au moins une unité de capteur (9, 9', 9") qui est disposée à l'intérieur et/ou à l'extérieur de l'unité de guidage (2), dans lequel le système de mesure et d'évaluation (8) est conçu pour détecter la modification angulaire.

2. Dispositif selon la revendication 1, **caractérisé en ce que** le système de mesure et d'évaluation (8) présente au moins une deuxième unité de capteur (9, 9', 9"), dans lequel la deuxième unité de capteur (9, 9', 9") est disposée à l'intérieur de l'unité de guidage (2).

3. Dispositif selon la revendication 1 ou 2, **caractérisé en ce que** l'unité de capteur respective (9, 9', 9") est une unité de capteur (9, 9', 9") reposant sur un principe de mesure sans contact.

4. Dispositif selon l'une des revendications 1 à 3, **caractérisé en ce que** le dispositif de mesure et d'évaluation (8) comprend au moins une unité d'enregistrement et de calcul (11), dans lequel l'unité d'enregistrement et de calcul (11) est conçue pour enregistrer les modifications angulaires détectées et/ou pour comparer une modification angulaire détectée à des modifications angulaires enregistrées.

5. Dispositif selon l'une des revendications 1 à 4, **caractérisé en ce qu'**une source de tension (12), de préférence, une source de tension rechargeable (12) est disposée à l'intérieur de l'unité de guidage (2), dans lequel la source de tension (12) est conçue pour alimenter le au moins un système de mesure et d'évaluation (8).

6. Dispositif selon l'une des revendications 1 à 5, **caractérisé en ce qu'**une électronique d'alimentation (14) est disposée à l'intérieur de l'unité de guidage (2), dans lequel l'électronique d'alimentation (14) est conçue pour l'alimentation sans contact du système de mesure et d'évaluation (8) et/ou de la source de tension (12).

7. Dispositif selon l'une des revendications 1 à 6, **caractérisé en ce que** le système de mesure et d'évaluation (8) dispose d'une unité d'interface (15) qui est conçue pour une liaison de signalisation sans fil.

8. Dispositif selon l'une des revendications 1 à 7, **caractérisé en ce que** des éléments d'étanchéité (17, 17') sont disposés à l'intérieur de l'unité de guidage (2), de préférence dans la zone d'une première extrémité (3.3) et dans la zone d'une deuxième extrémité (3.4) du corps cylindrique creux externe (3).

9. Dispositif selon l'une des revendications 1 à 8, **caractérisé en ce que** le système de mesure et d'évaluation (8) est logé sur l'axe central (7) ou sur le corps cylindrique creux interne (4), de préférence poussé sur l'axe central (7) ou emboîté sur le corps cylindrique creux interne (4).

10. Système de surveillance et de guidage d'une bande transporteuse avec un dispositif selon l'une des revendications 1 à 9 et une unité de réception (18), dans lequel l'unité de réception (18) est conçue pour une liaison de signalisation avec le système de mesure et d'évaluation (8).

11. Système selon la revendication 10, **caractérisé en ce que** l'unité de réception (18) comprend un dispositif de signalisation optique (20) et/ou est conçue pour la liaison avec un dispositif de signalisation optique (20).

12. Système selon la revendication 10 ou 11, **caractérisé en ce que** l'unité de réception (18) comprend un dispositif de signalisation acoustique (21) et/ou est conçu pour la liaison avec un dispositif de signalisation acoustique (21).

13. Système selon l'une des revendications 10 à 12, **caractérisé en ce que** l'unité de réception (18) comprend une unité d'évaluation (22) et/ou une unité d'affichage (23), dans lequel l'unité d'évaluation (22) présente au moins une unité d'enregistrement et de calcul et dans lequel l'unité d'enregistrement et de calcul est conçue pour enregistrer des modifications angulaires détectée et/ou pour comparer une modification angulaire détectée à des modifications angulaires enregistrées.

14. Système selon l'une des revendications 10 à 13, **caractérisé en ce que** l'unité de réception (18) est réalisée comme appareil portatif.

15. Système selon l'une des revendications 10 à 14, **caractérisé en ce que** la bande transporteuse présente un marqueur ou est dotée d'un marqueur, dans lequel le système comprend un capteur pour déterminer une période de mesure et/ou un temps de circulation du marqueur.
